# EUROPEAN PATENT SPECIFICATION

(11) **EP 1 299 482 B1**
(45) Date of publication and mention of the grant of the patent: **23.08.2006**
(21) Application number: 00981191.0
(22) Date of filing: 12.12.2000
(51) Int. Cl.: C09D 5/16

(54) **SELF-POLISHING MARINE ANTIFOULING PAINT COMPOSITION COMPRISING FIBRES AND METAL-CONTAINING CO-POLYMERS**
SELBSTPOLIERENDE ANWUCHSVERHINDERNDE UNTERWASSERANSTRICHZUSAMMENSETZUNG, DER FASERN UND DER METALLENTHALTENDE COPOLYMERE ENTHÄLT
COMPOSITION DE PEINTURE ANTISALISSURE MARINE AUTO-POLISSABLE ET COPOLYMERES RENFERMANT DU METAL

(30) Priority: 09.06.2000 DK 200000898
(43) Date of publication of application: 09.04.2003
(73) Proprietor: HEMPEL A/S, 2800 Kongens Lyngby (DK)
(72) Inventor: CODOLAR, Santiago Arias, E-08015 Barcelona (ES); ELBRO, Helle, Simon, DK-2860 Soborg (DK); PEDERSEN, Michael, Stanley, DK-2000 Frederiksberg (DK); GLADWIN, Tim, Scott, DK-1904 Frederiksberg (DK); BUCHWALD, Frants, DK-4583 Sjaellands Odde (DK)
(86) International application number: PCT/DK2000/000690
(87) International publication number: WO 2001/094479

(56) References cited:
- EP-A2- 0 260 958
- EP-A2- 0 952 194
- WO-A1-00/77102
- WO-A1-00/77103
- WO-A1-90/06968
- US-A- 5 304 236

## Description

### FIELD OF THE INVENTION

The present invention relates to antifouling paints having the ability to prevent unwanted fouling organisms from attaching and growing on immersed structures that come in contact with water, especially sea water. The present invention provides improved properties of such antifouling paint by incorporation of specific types of fibres.

### BACKGROUND OF THE INVENTION

On underwater structures and on ship's hulls which are exposed to sea and/or fresh water, attachment and growth of marine organisms cause severe economic losses because of the increased friction (and therefore increased consumption of fuel), or increased resistance to waves or currents (for static structures such as off-shore rigs), and because of decreased possible operation time.

An antifouling paint technology which has been investigated over the last decades, is the use of self-polishing antifouling paint compositions in which the polymer of the binder system is a trialkyltin derivative of a polymer containing carboxylic acid groups in the monomer segments, the trialkyltin groups being situated on the carboxylic acid residues. However, the increasing problem of pollution with tin compounds in, e.g., harbours has led to intensive research efforts to provide tin-free self-polishing antifouling paints.

The search for binder systems for tin-free self-polishing antifouling paints, on the one hand having inherent self-polishing properties and exhibiting good capabilities for incorporation of biologically active agents, and on the other hand being able to convey a good mechanical strength of the paint film, has so far been a difficult task.

One way of obtaining binder systems for antifouling paints, such as for tin-free self-polishing antifouling paints, is to employ large amounts of rosin or rosin equivalents as part of the binder system. However, incorporation of large amounts of rosin and rosin equivalent leads to major mechanical weaknesses which were believed to be prohibitive for full exploitation of rosin-based paints. However, improvements to this technology have, e.g., been described in the applicant's previous applications WO 96/15198 and WO 97/44401. These applications describe solutions to the problems relating to the prohibitive inherent mechanical deficiencies of particularly rosin- containing paints. The technology disclosed in the applicant's previous applications illustrates a way of counteracting the mechanical deficiencies of inherently weak paint compositions which would otherwise be unsuitable for high performance utility.

Another interesting (tin-free) paint technology which has been pursued with a certain success is self-polishing antifouling paint based on metal acrylate binders. This technology is *inter alia* described in EP 0 342 276 B1, EP 0 204 456 B1, EP 0 220 965, EP 1 033 392, EP 0 982 324, EP 900 809, US 6,133,280, EP 0 825 203, WO00/39225, and EP 0 471 204. Furthermore, a composition comprising metal acrylate binders and a chlorinated paraffin plasticizer is described in JP 11-323208. EP 1 006 156 A1 describes a metal acrylate based antifouling paints which exhibit crack resistance.

Although some products based on the above patents and patent applications have already reached the market, it is noted that the integrity of paints based on metal acrylate binders appears to be affected after use for an extended period of time, especially at the water line of a ship where cycles of sea-water exposure and sun light will induce a significant mechanical stress often resulting in cracking and flake formation.

Even though the mechanical properties of the known metal acrylate-based paints appear to be fully sufficient right after application to the surface of, e.g., a ship (and for a shorter period thereafter), the long term exposure under operation of a vessel coated with the paint, in particular exposure to alternate cycles of sea-water and sunlight may, as it has been illustrated in the examples disclosed herein, induce certain deficiencies. This problem is particularly relevant for self-polishing paint where a certain degree of water absorption occurs when a coat of the paint is submerged in sea-water. Absorption of water causes the paint film to become slightly swollen and when the paint subsequently is dried out, the paint film will again reduce in thickness.

### SUMMARY OF THE INVENTION

Thus, the underlying problem for the present invention is to provide improved self-polishing antifouling paint compositions which preserves the long term integrity after application to a surface intended for exposure to marine environments.

Thus, the present invention relates to a self-polishing marine antifouling paint composition comprising
i) at least one binder co-polymer comprising at least one side chain bearing at least one terminal group of formula I 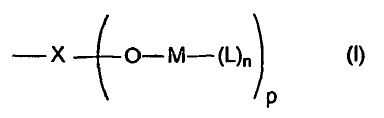 wherein X is 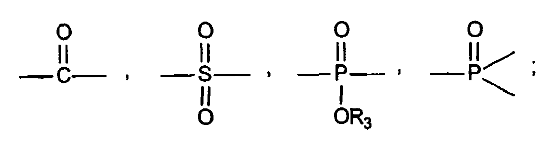 p is 1 or, if X is -P(=O)<, p is 2;
   M is a metal having a valency of 2 or more;
   n is an integer of 1 or more with the proviso that n+1 equals the metal valency;
   L is an organic acid residue and each L is independently selected from the group consisting of 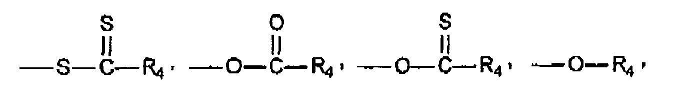 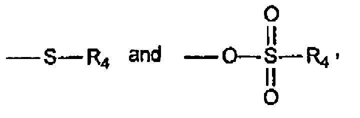 wherein R₄ is a monovalent organic residue, or L is -OH or combinations thereof;
   R₃ is hydrogen or a hydrocarbon group having from 1 to 10 carbon atoms; and
ii) fibres.

### DETAILED DESCRIPTION OF THE INVENTION

It has now been found that self-polishing antifouling paints comprising polymers of the type specified herein and which seem to possess certain deficiencies under conditions corresponding to the long term exposure to weathering, i.e. the conditions described in the "Blister Box Test" herein can be improved by the incorporation of fibres.

The "Blister Box Test" is performed in order to simulate the waterline area where the paint system is exposed to repeated wet/dry cycles. The test period of 19, 24 and 29 corresponds to various stages of the operation of a vessel. Some commercial products on the market are able to withstand exposure in the Blister Box test for 29 weeks and even more (see the comparative examples). If the ship is fully loaded, the majority of the antifouling paint coat is immersed in water. On the other hand, when the ship is only partly loaded a significant area of the antifouling paint coat is exposed to air/sun. Due to the fact that an antifouling paint always absorbs some amount of water, the paint increases in volume when immersed in water (due to water uptake) and decreases in volume (due to water release) when exposed to air. Repeated cycles of increase/decrease in paint volume implies that the paint is exposed to a very hard mechanical stress.

In the present context, the term "metal ester bond" covers bonds, in particular noncovalent bonds, between the metal ion and the ligand(s) in question. Thus, examples of bonds are, e.g., an ionic bond between the metal ion and the ligand(s) in question, and a bond where the ligand(s) in question is (are) co-ordinated to the metal ion through an electron lone-pair present on the ligand(s).

In an interesting embodiment of the invention the co-polymer to be used in the self-polishing paint composition according to the invention comprises at least one side chain bearing at least one terminal group of the general formula II

-X-O-M-(L)ₙ (II)

wherein X is 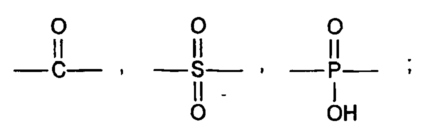 and M, n and L are as defined above.

Examples of monomers having a terminal group of the general formulae I or II (shown above) are acid-functional vinyl polymerisable monomers, such as methacrylic acid, acrylic acid, p-styrene sulfonic acid, 2-methyl-2-acrylamide propane sulfonic acid, methacryl acid phosphoxy propyl, methacryl 3-chloro-2-acid phosphoxy propyl, methacryl acid phosphoxy ethyl, itaconic acid, maleic acid, maleic anhydride, monoalkyl itaconate (e.g. methyl, ethyl, butyl, 2-ethyl hexyl), monalkyl maleate (e.g. methyl, ethyl, butyl, 2-ethyl hexyl; half-ester of acid anhydride with hydroxyl containing polymerisable unsaturated monomer (e.g. half-ester of succinic anhydride, maleic anhydride or phthalic anhydride with 2-hydroxy ethyl methacrylate.

As will be understood by the person skilled in the art, and as discussed in detail below, the above-mentioned monomers may be co-polymerised (in order to obtain the co-polymer to be used in the self-polishing paint composition according to the invention) with one or more vinyl polymerisable monomers. Examples of such vinyl polymerisable monomers are methyl acrylate, methyl methacrylate, ethyl acrylate, ethyl methacrylate, propyl acrylate, propyl methacrylate, butyl acrylate, butyl methacrylate, octyl acrylate, octyl methacrylate, 2-ethyl hexyl acrylate, 2-ethyl hexyl methacrylate, methoxy ethyl methacrylate, styrene, vinyl toluene, vinyl pyridine, vinyl pyrolidone, vinyl acetate, acrylonitrile, methacrylonitrile, dimethyl itaconate, dibutyl itaconate, di-2-ethyl hexyl itaconate, dimethyl maleate, di (2-ethyl hexyl) maleate, ethylene, propylene and vinyl chloride.

With respect to the ligand (L), each individual ligand is preferably selected from the group consisting of 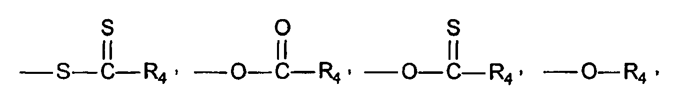 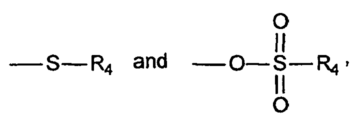 wherein R₄ is a monovalent organic residue.

Preferably, R₄ is selected from the group consisting of 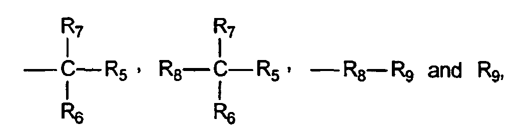 wherein R₅ is hydrogen or a hydrocarbon group having from 1 to 20 carbon atoms; R₆ and R₇ each independently represents a hydrocarbon group having from 1 to 12 carbon atoms;
R₈ is a hydrocarbon group having from 1 to 4 carbon atoms; and R₉ is cyclic hydrocarbon group having from 5 to 20 carbon atoms, such as abietic acid, pallustric acid, neoabietic acid, levopimaric acid, dehydroabietic acid, pimaric acid, isopimaric acid, sandaracopimaric acid and Δ8,9-isopimaric acid.

Examples of compounds which may be used as ligands are:
(1) Compounds comprising the group 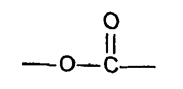 e.g. aliphatic acids, such as levulinic acid; alicyclic acids, such as naphthenic acid, chaulmoogric acid, hydnocarpusic acid, neo abietic acid, levo pimaric acid, palustric acid, 2-methyl-bicyclo-2,2,1-heptane-2-carboxylic acid; aromatic carboxylic acids such as salicylic acid, cresotic acid, α-naphthoic acid, β-naphthoic acid, p-oxy benzoic acid; halogen containing aliphatic acids, such as monochloro acetic acid, monofluoro acetic acid; halogen containing aromatic acids, such as 2,4,5-trichloro phenoxy acetic acid, 2,4-dichloro phenoxy acetic acid, 3,5-dichloro benzoic acid; nitrogen-containing organic acids, such as quinoline carboxylic acid, nitro benzoic acid, dinitro benzoic acid, nitronaphthalene carboxylic acid; lactone carboxylic acids, such as pulvinic acid, vulpinic acid; uracil derivatives, such as uracil-4-carboxylic acid, 5-fluoro uracil-4-carboxylic acid, uracil-5-carboxylic acid; penicillin-derived carboxylic acids, such as penicillin V, ampicillin, penicillin BT, penicillanic acid, penicillin G, penicillin O; Rifamycin B, Lucensomycin, Salcomycin, chloroamphenicol, variotin, Trypacidine; and various synthetic fatty acids.
(2) Compounds comprising the group 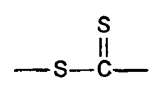 e.g. dimethyl dithiocarbamate and other dithiocarbamates.
(3) Compounds comprising the group 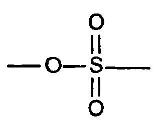 e.g. sulphur containing aromatic compounds, such as 1-naphthol-4-sulphonic acid, p-phenyl benzene sulphonic acid, β-naphthalene sulphonic acid and quinoline sulphonic acid.
(4) Compounds comprising the group

   -S-

   such as compounds comprising the following groups 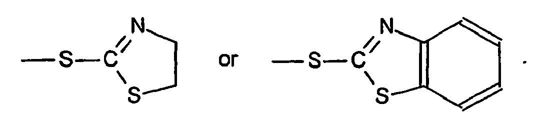
(5) Compounds comprising the group 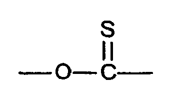 such as various thiocarboxylic compounds.
(6) Compounds comprising the group -O- or -OH e.g. phenol, cresol, xylenol, thymol, carvacol, eugenol, isoeugenol, phenyl phenol, benzyl phenol, guajacol, butyl stilbene, (di) nitro phenol, nitro cresol, methyl salicylate, benzyl salicylate, mono-, di-, tri-, tetra- and penta-chlorophenol, chlorocresol, chloroxylenol, chlorothymol, p-chloro-o-cyclo-hexyl phenol, p-chloro-o-cyclopentyl phenol, p-chloro-o-n-hexyl phenol, p-chloro-o-benzyl phenol, p-chloro-o-benzyl-m-cresol and other phenols; β-naphthol, 8-hydroxy quinoline.

Although not generally preferred, it is also possible that one or more or all of the ligands (L) are -OH groups.

With respect to the metal (M), any metal having a valency of 2 or more may be used. Specific examples of suitable metals include Ca, Mg, Zn, Cu, Ba, Te, Pb, Fe, Co, Ni, Bi, Si, Ti, Mn, Al and Sn. Preferred examples are Co, Ni, Cu, Zn, Mn, and Te, in particular Cu and Zn. When synthesising the metal-containing co-polymer, the metal may be employed in the form of its oxide, hydroxide or chloride. It is contemplated, however, that the metal may also be employed in the form of other halogenides (such as its fluoride, iodide or bromide salt) or in the form of its sulfide or carbonate.

The co-polymer to be used in the self-polishing paint composition according to the invention may be prepared as described in e.g. EP 0 471 204 B1, EP 0 342 276 B1 or EP 0 204 456 B1, i.e. by one of the following methods:
A method wherein a polymerisable unsaturated monomer having the desired organic acid metal ester bond at an end portion is first prepared and co-polymerised with other polymerisable unsaturated monomer(s);

A method wherein a co-polymer obtained by the co-polymerisation of a polymerisable unsaturated organic acid monomer with other polymerisable unsaturated monomer(s) is reacted with a monovalent organic acid and a metal oxide, chloride or hydroxide or is subjected to an ester exchange reaction with a monovalent carboxylic acid metal ester. More specifically, the co-polymer may be prepared by either one of the following methods.
(1) A mixture of
   (a) a metal oxide, hydroxide, sulfide or chloride,
   (b) a monovalent organic acid or its alkali metal salt, and
   (c) a polymerisable unsaturated organic acid or its alkali metal salt, is heated under stirring at a temperature lower than the decomposition temperature of the desired metal ester product, and the by-produced substances as alkali metal chloride, water, monovalent
   organic acid metal ester, bifunctional polymerizable unsaturated organic acid metal salt are removed to obtain a purified metal ester between the polymerisable unsaturated organic acid and the monovalent organic acid.
   In the above-mentioned reaction, it is not always necessary to use stoichiometric amounts of (a), (b) and (c) and one may use, in terms of equivalent ratio, (a):(b):(c)=1:0.8-3:0.8-2 to obtain the desired product.
   The thus obtained metal ester between the polymerisable unsaturated organic acid and the monovalent organic acid or the mixture of said metal ester and the monovalent organic metal ester is then subjected to a homo-polymerisation or a co-polymerisation with other co-polymerisable monomer(s) to give the desired co-polymer having at least one side chain bearing at least terminal group as shown in formulae I or II above.
(2) Alternatively, a mixture of
   (d) a co-polymer having at a side chain an organic acid or its alkali metal salt,
   (e) a metal oxide, hydroxide, sulfide or chloride, and
   (f) a monovalent organic acid, is heated under stirring at a temperature lower than the decomposition temperature of the desired metal ester-containing co-polymer, and the by-produced substances are removed, if desired, to obtain a co-polymer having at least one side chain bearing at least one terminal group as shown in formulae I or II above.
   With respect to the ratios of the materials used in this reaction, it is preferred to use, in terms of equivalent ratio, (d):(e):(f)=1:0.8-1.5:0.8-2 and more preferably 1:1.0-1.2:1.0-1.5.
   When a low boiling monovalent organic acid is selected and the reaction is accompanied by a dehydration, there is a fear that the monovalent organic acid is distilled off together with water and that a metal bond is formed between the polymer-chains, thereby causing an increase in viscosity and gelation of the product. Therefore, in this particular case, it is preferred to use a higher amount of (f) than indicated above.
(3) Alternatively, the desired product may be prepared by reacting a co-polymer having at a side chain an organic acid (g) with a monovalent organic acid metal ester (h) at a temperature of not higher than the decomposition temperature of the desired product, thereby effecting an ester exchange reaction between the materials used.

In this reaction, when the selected monovalent organic acid has a low boiling point (as, for example, acetic acid), there is a fear that a metal ester bonding is formed between the polymer-chains and, therefore, the reaction should be carefully controlled and proceeded with. Usually, the material (h) is used in an amount of from 0.3 to 3 equivalents, more preferably of from 0.4 to 2.5 equivalents, per equivalent of (g).

Examples of polymerisable unsaturated organic acids (c) to be used include methacrylic acid, acrylic acid, p-styrene sulfonic acid, 2-methyl-2-acrylamide propane sulfonic acid, methacryl acid phosphoxy propyl, methacryl 3-chloro-2-acid phosphoxy propyl, methacryl acid phosphoxy ethyl, itaconic acid, maleic acid, maleic anhydride, monoalkyl itaconate (e.g. methyl, ethyl, butyl, 2-ethyl hexyl), monalkyl maleate (e.g. methyl, ethyl, butyl. 2-ethyl hexyl; half-ester of acid anhydride with hydroxyl containing polymerisable unsaturated monomer (e.g- half-ester of succinic anhydride, maleic anhydride or phthalic anhydride with 2-hydroxy ethyl (meth) acrylate.

With respect to the monovalent organic acid (b), any aliphatic, aromatic, alicyclic or heterocyclic organic acid may be used. Typical examples of such acids are: acetic acid, propionic acid, levulinic acid benzoic acid, salicylic acid, lactic acid, 3,5-dichlorobenzoic acid, lauric acid, stearic acid, nitrobenzoic acid, linolenic acid, ricinoleic acid, 12-hydroxy stearic acid, fluoroacetic acid, pulvinic acid, abietic acid, mercaptobenzothiazole, o-cresotic acid, naphthol-1-carboxylic acid, p-phenyl benzene sulfonic acid, p-oxybenzoic acid, chloroacetic acid, dichloroacetic acid, naphthenic acid, b-naphthalene sulphonic acid, naphthol-1-sulfonic acid, 5-chloro-α,α-bis (3,5-dichloro-2-hydroxyphenyl) toluene sulphonic acid, p-phenyl benzoic acid, p-toluene sulphonic acid, p-benzene chlorosulphonic acid, dimethyl dithio carbamic acid, diethyl dithio carbamic acid, dibutyl dithiocarbamic acid, lithocholic acid, phenoxy acetic acid, 2,4-dichlorophenoxy acetic acid, pivalic acid, valeric acid and various synthetic fatty acids.

Yet another particular type of co-monomer is the one represented by the formula II of EP 1 006 156 A1. Examples of the polymerizable monomers include 2-methoxyethyl (meth)acrylate, 2-ethoxyethyl (meth)acrylate, phenoxyethyl (meth)acrylate, 2-(2-ethylhexaoxy)ethyl (meth)acrylate, 1-methyl-2-methoxyethyl acrylate, 3-metoxybutyl acrylate, 3-methyl-3-metoxybutyl acrylate, m-methoxyphenylethyl (meth)acrylate, and p-methoxyphenylethyl (meth)acrylate as well as 2-hydroxyethyl (meth)acrylate.

With respect to the above-mentioned other polymerisable unsaturated monomers, any customarily used ethylenically unsatured monomer may be used. Examples of such monomers are methyl acrylate, methyl methacrylate, ethyl acrylate, ethyl methacrylate, propyl acrylate, propyl methacrylate, butyl acrylate, butyl methacrylate, octyl acrylate, octyl methacrylate, 2-ethyl hexyl acrylate, 2-ethyl hexyl methacrylate, methoxy ethyl methacrylate, styrene, vinyl toluene, vinyl pyridine, vinyl pyrolidone, vinyl acetate, acrylonitrile, methacrylo nitrile, dimethyl itaconate, dibutyl itaconate, di-2-ethyl hexyl itaconate, dimethyl maleate, di (2-ethyl hexyl) maleate, ethylene, propylene and vinyl chloride. One particular type of co-monomers is acrylic or methacrylic esters wherein the alcohol residue includes a bulky hydrocarbon radical or a soft segment, for example a branched alkyl ester having 4 or more carbon atoms or a cycloalkyl ester having 6 or more atoms, a polyalkylene glycol monoacrylate or monomethacrylate optionally having a terminal alkyl ether group or an adduct of 2-hydroxyethyl acrylate or methacrylate with caprolactone, e.g. as described in EP 0 779 304 A1"

If desired, hydroxy-containing monomers, such as 2-hydroxy ethyl acrylate, 2-hydroxy ethyl methacrylate, 2-hydroxy propyl acrylate, 2-hydroxy propyl methacrylate may also be used.

With respect to the polymers (d) and (g) which have an organic acid group at the side chain, mention is made of organic acids bearing vinyl resins, polyester resins, oil modified alkyd resins, fatty acid modified alkyd resins and/or epoxy resins.

It should be noted that in the resulting co-polymer, not all the organic acid side groups need to contain a metal ester bond; some of the organic acid side groups may be left unreacted in the form of free acid, if desired.

The weight average molecular weight of the metal-containing co-polymer is generally in the range of from 1,000 to 150,000, such as in the range of from 3,000 to 100,000, preferably in the range of from 5,000 to 60,000.

Although a number of different methods for determining the weight average molecular weight of the polymer in question will be known to the person skilled in the art, it is preferred that the weight average molecular weight is determined in accordance with the GPC-method described at page 34 in WO 97/44401.

In another interesting embodiment of the invention the paint composition according to the invention further comprises an amount of an organic ligand at least equal to the ligand-to-metal co-ordination ratio of 1:1, said organic ligand being selected from the group consisting of aromatic nitro compounds, nitriles, urea compounds, alcohols, phenols, aldehydes, ketones, carboxylic acids and organic sulphur compounds, whereby the co-polymer defined above forms a polymer complex with the organic ligand in situ.

Thus, if the above-defined co-polymer is considered as a hybrid salt then, by co-ordinating an organic ligand to each metal atom, the ion-association of the hybrid salt is retarded significantly to have a lower viscosity in a solution compared to the corresponding solution not containing the organic ligand. Furthermore, improvements may be found both in the sustained release of metal ions and the film consumption rate. Another important advantage is the fact that the complex hybrid salt is no longer reactive with conventional antifouling agents and pigments such as cuprous oxide, zinc oxide and the like.
Therefore, the antifouling paint composition of the present invention is compatible with the conventional antifouling agents and pigments.

Examples of monobasic organic acids usable for forming the hybrid salt include monocarboxylic acids such as acetic, propionic, butyric, lauric, stearic, linolic, oleic, naphthenic, chloroacetic fluoroacetic, abietic, phenoxyacetic, valeric, dichlorophenoxyacetic, benzoic or napthoic acid; and monosulphonic acids such as benzenesulphonic acid, p-toluenesulphonic acid, dodecylbenzenesulphonic acid, naphthalenesulphonic or p-phenylbenzenesulforic acid.

A preferred method for producing the polymeric hybrid salt has been disclosed in Japanese Patent Kokai No. 16809/1989. According to this method, copolymers containing pendant acid groups are reacted with a metal salt of a low boiling point-monobasic organic acid and a high boiling point-monobasic organic acid simultaneously to form a hybrid salt in which both the polymer pendant acid anion and the high boiling point-monobasic acid anion are bound to the same metal cation. For example, a hybrid copper salt with the polymeric acid and naphthenic acid may be obtained by reacting the polymeric acid with cupric acetate and naphthenic acid.

The polymer hybrid salts thus produced take a pseudo-cross-linked form due to ion-association and, therefore, have a relatively high viscosity in solutions. However, the viscosity may be decreased significantly by co-ordinating a further ligand to the hybrid salt as described herein. The resulting polymer complex thus formed also exhibits a relatively constant rate both in metal release and film consumption when applied as an antifouling coating film.

Organic ligands used for this purpose are selected from the group consisting of aromatic nitro compounds, urea compounds, nitriles, alcohols, phenols, aldehydes, ketones, carboxylic acids, and organic sulphur compounds. The organic ligands are not limited to unidentate ligands but also include polydentate ligand containing a plurality of identical or different ligating atoms in the ligand molecule.

Specific examples of such ligands include aromatic nitro, compounds such as nitrobenzene; nitriles such as isophthalonitrile; urea compounds such as urea, thiourea, N-(3,4-dichlophenyl)-N'-methoxy-N'-methylurea or N-(3,4-dichlorophenyl)-N',N'-dimethylurea; alcohols such as butanol, octanol or geraniol; phenols such as hydroquinone, hydroquinone monomethyl ether, nonylphenol or BHT; aldehydes such as acetaldehyde or propionaldehyde; ketones such as acetylacetone, acetophenone or 2-amino-3-chloro-1,4-naphthoquine; carboxylic acids such as acetic acid, propionic acid, benzoic acid, lactic acid, malic acid, citric acid, tartaric acid or glycine; and sulphur compounds such as thiophene and its derivatives, n-propyl p-toluenesulphonate, mercaptobenzothiazole, dimethyldithiocarbamate or benzeneisothiocyanate. Some of these ligands may be used for antifouling purposes in conventional antifouling paint formulations.

The amount of organic ligand for complexing the polymer hybrid salt should be at least equal to the ligand-to-metal co-ordination ratio of 1 : 1. The maximum will be such an amount to saturate the co-ordination number of a particular metal used. For example, when a metal species having a coordination number of 4 is used, one or two moles of unidentate ligands or one mole of bidentate ligand may be co-ordinated to the metal atom.

The organic ligands are incorporated to a solution or varnish of the polymer hybrid salt to form a polymer complex in situ. The presence of excessive amounts of the organic ligands may be tolerated unless coating films are adversely affected such as occurrence of cracks or blisters when soaked in saline. The complexed copolymer may have a metal content from 0.3 to 20 %, preferably from 0.5 to 15 % by weight.

In the present context, the terms "self-polishing" and "polishing" are intended to mean that the coating in question, or the paint when dried up as a coating, under the test conditions described in the Polishing Rate Test herein, is subject to a reduction of the thickness of the coating of at least 1 µm per 10,000 Nautical miles (18,520 km) of relative movement between the coated surface and the surrounding aqueous medium due to removal of coating material from the surface of the coating.

In the present context the term "% by solids volume" is intended to mean the volume/volume percentage of the dry matter of the paint.

It is presently believed that the fibres to be used within the present invention should fulfil certain criteria with respect to dimensions in order to provide the improved properties of the paints within the present invention. Thus, with respect to average length and average thickness of the fibres which are added to the paint during manufacture of the paint, such fibres have an average length of 25-2000 µm and an average thickness of 1-50 µm with a ratio between the average length and the average thickness of at least 5, especially an average length of 25-500 µm and an average thickness of 1-25 µm with a ratio between the average length and the average thickness of at least 10, in particularly an average length of 50-250 µm (such as 50-170 µm) and an average thickness of 2-10 µm with a ratio between the average length and the average thickness of at least 15, such as at least 20.

It should be noted that the term "length" refers to the greatest dimension of the fibre particle in question. The term "average" when used in connection with length indicates that a certain variation of the length of fibres exists within the distribution of the fibres used. The term "average thickness" also refers to the fibres in question, however with regard to the distribution of fibres also taking into account the longitudinal and cross-sectional variation with each individual fibre.

Generally, "fibres" is intended to cover any fibres within the groups of natural inorganic fibres, synthetic inorganic fibres, natural organic fibres, synthetic organic fibres, and metallic fibres, or mixtures thereof. Without being bound to any specific theory, it is however presently believed that natural inorganic fibres and synthetic inorganic fibres, in particular mineral fibres of these types, are especially preferred.

In order for a certain particle to be considered as a fibre within the present context, the ratio between the greatest dimension and the smallest dimension perpendicular to the length dimension in substantially all points along the longitudinal axis (the length dimension - longest dimension) should not exceed 2,5:1, preferably not exceed 2:1. Furthermore, the ratio between the longest dimension and the average of the two shortest dimensions should be at least 5:1. Thus, fibres are characterised by having one long dimension and two short dimension, where the long dimension is substantially longer than the two short dimensions (typically by an order of magnitude, or even more), and the two short dimensions are substantially equal (of the same order of magnitude). For completely regular fibres, i.e. fibres having a cylindrical shape, it is evident how to determine the "length" (longest dimension) and the two (identical) shortest dimensions. For more irregular fibres, it is believed that the relationship between the dimensions can be evaluated by the following hypothetical experiment: A regular, right-angled box is constructed around the fibre. The box is constructed so as to have the smallest possible volume as it should fully comprise the fibre. To the extent that the fibre is curved, it is (again hypothetically) assumed that the fibre is flexible so that the volume of the hypothetical box can be minimised by "bending" the fibre. In order for the "fibre" to be recognised as so in the present context, the ratio between the two smallest dimensions of the box should be at the most 2.5:1 (preferably 2:1) and the ratio between the longest dimension of the box and the average of the to smallest dimensions of the box should be at least 5:1.

The above is given as a general guideline in order to exclude other types of particles which may be referred to as ''fibres'' but which do have less satisfactory properties within the present invention. In particular, the term "fibre" is not intended to include so-called "fibre" materials which are used as fillers (e.g. thixotropic agents and frayed type fillers with no well defined dimensions such as asbestine), cf. Hawley's Condensed Chemical Dictionary, 11^{th} Ed., (Sax and Lewis, eds.), Van Nostrand Reinhold Company, New York, 1987, page 521. Neither does "fibre" include flake type fillers, e.g. mica, cf. the definition above. With respect to "curved" fibres, it should be understood that the length dimension should be considered as the length along the curve defined by the fibre.

Examples of inorganic fibres are carbide fibres such as silicon carbide fibres, boron carbide fibres, niobium carbide fibres; nitride fibres such as silicon nitride fibres; boron containing fibres such as boron fibres, boride fibres; silicon-containing fibres such as silicon fibres, alumina-boron-silica fibres, E-glass (non-alkaline alumoborosilicate) fibres, C-glass (non-alkaline or low-alkaline soda lime-alumoborosilicate) fibres, A-glass (alkaline soda lime-silicate) fibres, S-glass fibres, CEMFIL-glass fibres, ARG-glass fibres, mineral-glass fibres, non-alkaline magnesia alumosilicate fibres, quartz fibres, silicic acid fibres, silica fibres, high-silica fibres, alumina high-silica fibres, alumosilicate fibres, aluminium silicate fibres, magnesia alumosilicate fibres, soda borosilicate fibres, soda silicate fibres, polycarbosilane fibres, polytitanocarbosilane fibres, polysilazane fibres, hydridopolysilazane fibres, tobermorite fibres, samarium silicate fibres, wollastonite fibres, potassium aluminium silicate fibres; metal fibres such as iron fibres, aluminium fibres, bismuth fibres, antimony fibres, wolfram fibres, molybdenum fibres, chrome fibres, copper fibres, germanium fibres, rhodium fibres, beryllium fibres, and metal alloy fibres thereof such as bronze fibres, aluminium-nickel alloy fibres, copper-tin alloy fibres, steel fibres; oxide fibres such as zirconia fibres, alumina fibres, magnesia fibres, zinc oxide fibres, indium oxide fibres, titanium oxide fibres, beryllium oxide fibres, nickel oxide fibres, thorium oxide fibres, yttrium oxide fibres, potassium titanate fibres; carbon fibres such as pure carbon fibres, graphite fibres, slagwool fibres, charcoal fibres; sulphide fibres such as zinc sulphide fibres, cadmium sulphide fibres; phosphate fibres such as hydroxyapatite fibres, calcium hydrogenphosphate (brushite) fibres, neodymium pentaphosphate fibres, and silver phosphate fibres; calcium sulphate fibres; tin iodide fibres; calcium iodate fibres; calcium fluoride fibres; sodium aluminium hydroxycarbonate fibres; rockwool fibres such as pure rockwool fibres and basalt rockwool fibres; processed mineral fibres from mineral wool; volcanic rock fibres; montmorillonite fibres; atapulgite fibres; calcined bauxite fibres; etc.; modified by any chemical or physical processes; and any mixture thereof.

Examples of natural and synthetic organic fibres are aromatic polyamide fibres such as poly(p-benzamide) fibres, poly(p-phenylene-terephthalamide) fibres, poly(p-phenylene-2,6-naphthalamide) fibres, poly(3,4'-diphenylether-terephthalamide) fibres, poly(p-phenylene-(p-benzamide)-terephthalamide) fibres, poly(p-benzhydrazide terephthalamide) fibres, poly(m-phenylene-isophthalamide) fibres, poly(N,N'-m-phenylene-bis(m-benzamide)-terephthalamide) fibres, poly(N,N'-m-phenylene-bis(m-benzamide)-2,6-naphthalamide) fibres, poly(N,N'-m-phenylene-bis(m-benzamide)-4,4'-biphenyl-dicarboxamide) fibres, poly(4,4'-bis(p-aminophenyl)-2,2'-bithiazole-isophthalamide) fibres, poly(2,5-bis(p-aminophenyl)-1,3,4-oxa-diazole-isophthalamide) fibres, poly(4,4'-diaminobenzanilide-isophthalamide) fibres, poly(2-methyl-p-phenylene-2,6-naphthalamide) fibres, poly(2,6-dichloro-p-phenylene-2,6-naphthalamide) fibres; aromatic polyhydrazide fibres such as poly(terephthalic-m-phenylene-hydrazide) fibres, poly(terephthalic-hydrazide) fibres, poly(p-phenylene-N-methyl-hydrazide) fibres; aromatic polyester fibres such as poly(chloro-1,4-phenylene-ethylene-dioxy-4,4'-benzoate-co-terephthalate) fibres, poly(chloro-1,4-phenylene-4,4'-oxydibenzoate) fibres, poly(methyl-1,4-phenylene-4,4'-oxydibenzoate) fibres, poly(chlorophenylene-hexahydroterephthalate) fibres; aromatic polyazomethine fibres such as poly(nitrilo-(2-methyl-1,4-phenylene)nitrilomethylidyne-1,4-phenylenemethylidyne) fibres; aromatic polyimide fibres such as aromatic polypyromellitimide fibres, aromatic polytrimellitimide fibres, polyester-imide fibres, poly(4,4'-diphenyl-ether-pyromellitimide) fibres; aromatic heterocyclic polymeric fibres such as polybenzimidazole fibres such as poly-(2,2'-(m-phenylene)-5,5'-bibenzimidazole) fibres, polybenzothiazole fibres such as poly(2-(1,4-phenylene)-2'-(6,6'-bibenzothiazole)) fibres and poly(2-(1,3-phenylene)-2'-(6,6'-bibenzothiazole)) fibres, polybenzoxazole fibres such as poly((1,7-dihydrobenzo(1,2-d:4,5-d')dioxazole-2,6-diyl)-1,4-phenylene) fibres and poly((benzo(1,2-d:4,5-d')bisoxazol-2,6-diyl)-1,4-phenylene) fibres, polyoxadiazole fibres such as polyarylene-1,3,4-oxadiazole fibres; cellulose fibres such as α-cellulose fibres, β-cellulose fibres, mineral cellulose fibres, methylcellulose fibres, cellucotton fibres, regenerated cellulose (rayon) fibres, cellulose acetate fibres, jute fibres, cotton fibres, linen fibres, ramie fibres, sisal fibres, heme fibres, flax fibres, cyanoethylated cellulose fibres, acetylated cellulose fibres; wood fibres such as pine, spruce and fir wood fibres, lignin fibres and fibres of lignin derivatives; rubber fibres and fibres of derivatives of rubber; polyolefin fibres such as polyethylene fibres, polypropylene fibres, polytetrafluoroethylene fibres, polybutadiene fibres; polyacetylene fibres; polyester fibres; acrylic fibres and modified acrylic fibres such as acrylic acid fibres, styrol/acrylate fibres; acrylonitrile fibres such as acrylonitrile fibres and polyacrylonitrile fibres; elastomeric fibres; protein fibres such as casein fibres, maize protein fibres, soybean protein fibres, groundnut protein fibres; alginate fibres; poly(ethylene terephthalate) fibres; polyvinyl alcohol fibres; aliphatic polyamide fibres such as nylon fibres e.g. nylon 6.6 fibres, nylon 6 fibres, nylon 6.10 fibres; poly(phenylene sulphide) fibres; polyvinylchloride fibres; polychloroethene fibres; poly(bisbenzimidazobenzophenanthrolin) fibres; polyoxymethylene fibres; polyurethane fibres; vinyl polymeric fibres; viscose fibres; etc.; modified by any chemical or physical processes; and any mixture thereof.

It is presently believed that one very interesting group of fibres is inorganic fibres, in particular mineral fibres. Particularly preferred examples of such fibres are silicon-containing fibres; metal fibres; oxide fibres; carbon fibres; rockwool fibres; processed mineral fibres from mineral wool; volcanic rock fibres; wollastonite fibres; montmorillonite fibres; tobermorite fibres; atapulgite fibres; and calcined bauxite fibres.

At present, especially preferred are mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, and processed mineral fibres from mineral wool. Examples of commercially available mineral fibres which are believed to improve the mechanical properties according to the invention are (average fibre length in µm; average fibre thickness in µm):
1. Inorphil 061-10 ex Laxå Bruk AB (Sweden), synthetic mineral fibre (140;4)
2. Inorphil 161-10 ex Laxå Bruk AB (Sweden), synthetic mineral fibre (140;4)
3. Inorphil 361-10 ex Laxå Bruk AB (Sweden), synthetic mineral fibre (140;4)
4. Inorphil 061-20 ex Laxå Bruk AB (Sweden), synthetic mineral fibre (160;4)
5. Inorphil 461-20 ex Laxå Bruk AB (Sweden), synthetic mineral fibre (160;4)
6. Inorphil 061-30 ex Laxå Bruk AB (Sweden), synthetic mineral fibre (200;4)
7. Inorphil 061-60 ex Laxå Bruk AB (Sweden), synthetic mineral fibre (300;4)
8. MS 600 ex Lapinus Fibres BV (The Netherlands), volcanic rock fibre (125;5)
9. P045-MS 600 (or MS600 Roxul 1000) ex Lapinus Fibres BV (The Netherlands), mineral fibre (125;5.5)
10. RF 5104 ex Lapinus Fibres BV (The Netherlands), volcanic rock fibre (125;5)
11. RF 5118 ex Lapinus Fibres BV (The Netherlands), volcanic rock fibre (650;5)
12. FG 400/060 ex Schwarzwälder Textil-Werke (Germany), E-glass (230;9-14)
13. FG 400/300 ex Schwarzwälder Textil-Werke (Germany), E-glass (400;9-14)
14. FG 400/100 ex Schwarzwälder Textil-Werke (Germany), E-glass (250;9-14)
15. FG 440/040 ex Schwarzwälder Textil-Werke (Germany), E-glass (150;9-14)
16. F 550/1 S ex Schwarzwälder Textil-Werke (Germany), mineral glass (500;4.4)
17. F 554/1 SR ex Schwarzwälder Textil-Werke (Germany), rockwool (500;5)
18. F 580/1 S ex Schwarzwälder Textil-Werke (Germany), ceramic (500;2.8)
19. Nyad G ex Nyco Minerals (U.S.A), wollastonite (length/diameter ratio 15:1)
20. Tixal 102 ex Tixal (Germany), C-glass (-;-)
21. Tixal 202 ex Tixal (Germany), C-glass (-;-)
22. RCF-600 ex Sumitomo (Japan), C-glass (820;-)
23. RCF-160 ex Sumitomo (Japan), C-glass (250;-)
24. RCF-140 ex Sumitomo (Japan), C-glass (175;-)
25. RCF-140G ex Sumitomo (Japan), C-glass (175;-)
26. RCF-140N ex Sumitomo (Japan), C-glass (175;-)
   Examples of commercially available organic fibres which are believed to improve the mechanical properties according to the invention are (average fibre length in µm; average fibre thickness in µm):
27. F PA 222/040 ex Schwarzwälder Textil-Werke (Germany), polyamide (500;15-30)
28. F PA 240/040 ex Schwarzwälder Textil-Werke (Germany), polyamide (500;15-30)
29. F PA 230/040 ex Schwarzwälder Textil-Werke (Germany), polyamide (500; 15-35)
30. F PAC 238/040 ex Schwarzwälder Textil-Werke (Germany), polyacrylonitrile (500;-)
31. F PES 231/040 ex Schwarzwälder Textil-Werke (Germany), polyester/polyamide (500; 1 0-20)
32. F PP 261/040 ex Schwarzwälder Textil-Werke (Germany), polypropylene (500;21)
33. F PAC O 245/040 ex Schwarzwälder Textil-Werke (Germany), polyacrylonitrile preoxidized (500;10-12)
34. F 501/050 ex Schwarzwälder Textil-Werke (Germany), jute (500;30-500)
35. Sylothix 51 ex Grace AB (Germany), polyethylene (400;-)
36. Sylothix 52 ex Grace AB (Germany), polyethylene + silica (400;-)
37. Arbocel BE 00 ex J. Rettenmaier & Söhne GmbH + Co. (Germany), cellulose (120;20)
38. Lignocel C 120 ex J. Rettenmaier & Söhne GmbH + Co. (Germany), conifer (70-150;-)
39. Lignocel C 250 A ex J. Rettenmaier & Söhne GmbH + Co. (Germany), conifer (150-250;-)
40. Technocel 300 ex C. F. F. Cellulose-Füllstoff-Fabrik (Germany), cellulose (65% <90;-)
41. Technocel 200 ex C. F. F. Cellulose-Füllstoff-Fabrik (Germany), cellulose (80% <90;-)
42. Technocel 150 DU ex C. F. F. Cellulose-Fülllstoff-Fabrik (Germany), cellulose (95% <90;-)
43. Technocel 90 DU ex C. F. F. Cellulose-Fallstoff-Fabrik (Germany), cellulose (65% <32;-)
44. Technocel 400 C ex C. F. F. Cellulose-Füllstoff-Fabrik (Germany), cellulose (-;-)
45. F PP 261/040 ex Schwarzwälder Textil-Werke, polypropylene fibre, white, (500;21)
46. FB1/035 ex Schwarzwälder Textil-Werke, cotton fibre, white, (400;-)
47. F PAC 235/040 ex Schwarzwälder Textil-Werke, polyacrylonitrile fibre, white, (500;-)

It is however also presently believed that some organic fibres can be especially advantageous within the present invention. Particularly preferred examples of such fibres are aromatic polyamide fibres; aromatic polyester fibres; aromatic polyimide fibres; cellulose fibres; cotton fibres; wood fibres; rubber fibres and fibres of derivatives of rubber; polyolefin fibres (e.g. polypropylene fibres); polyacetylene fibres; polyester fibres; acrylic fibres and modified acrylic fibres; acrylonitrile fibres (e.g. preoxidised acrylonitrile fibres); elastomeric fibres; protein fibres; alginate fibres; poly(ethylene terephthalate) fibres; polyvinyl alcohol fibres; aliphatic polyamide fibres; polyvinylchloride fibres; polyurethane fibres; vinyl polymeric fibres; and viscose fibres. Presently, even more preferred examples of such fibres are polyethylene fibres, polypropylene fibres, cotton fibres, cellulose fibres, polyacrylonitrile fibres, preoxidised polyacrylonitrile fibres, and polyester fibres.

Although the organic fibres should fulfil essentially the same criteria with respect to average length and average thickness as the inorganic fibres and often fall within the same ranges with respect to preferred average length and average thickness, it is believed that advantageous organic fibres in special embodiments may be considerable longer than indicated above. Thus, in a special embodiment, the organic fibres preferably have an average length of 100-1500 µm and an average thickness of 1-50 µm, such as 1-30 µm, with a ratio between the average length and the average thickness of at least 5, especially an average length of 200-750 µm and an average thickness of 2-15 µm with a ratio between the average length and the average thickness of at least 15.

In view of the above, it is presently believe that a particularly interesting group of fibres (including inorganic as well as organic fibres) is mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, processed mineral fibres from mineral wool, polyethylene fibres, polypropylene fibres, cotton fibres, cellulose fibres, polyacrylonitrile fibres, preoxidised polyacrylonitrile fibres, and polyester fibres.

The surface of the fibres may or may not have been modified (surface treated) by chemical or physical processes. Examples of such modification processes used to improve the beneficial effects of the fibres are carbonisation; silylation; surface oxidation; etching such as treatment with alkalimetal hydroxide, treatment with hydrofluoric acid; coating; polyelectrolytic entrapment in the porous surface structures; adsorption processes; hydrogen-bonding processes; cationic bonding processes; esterification; anionic bonding processes; etc. as well as any modification processes included in the manufacturing of the fibres.

Without being bound to any theory, it is envisaged that the inorganic fibres, in particular the mineral fibres, mentioned above have the most interesting properties with respect to ease of incorporation into the paint (before or after mixing/milling), *i.e.* the compatibility between the fibres, both in the native form as well as in any surface modified form, and polymer-based binder system is favourable thereby leading to the envisaged improvement of the properties of the paint compositions.

It is presently believed that an especially relevant feature for the fibres to be incorporated in the paints is the ability to biodegrade under physiological conditions, especially in the respiratory organs (the lungs) of mammals, especially humans. Thus, it is believed that especially interesting fibres are those which are able to biodegrade when present in a modified Gamble's solution as defined in WO 96/14454, page 9. The degree of biodegradablity should preferably be at least 20 nm/day, such as at least 30 nm/day, in particular at least 50 nm/day when tested as described in WO 96/14454. Examples of suitable biodegradable fibres are the ones described in WO 96/14454 and WO 96/14274. A specific example thereof is the commercially available P045-MS 600 (or MS600 Roxul 1000) ex Lapinus Fibres BV (see below). The biodegradability is especially relevant for mineral fibres.

In view of the above, it is also envisaged that biodegradable fibres can be advantageously used in a number of other self-polishing antifouling paints such as self-polishing paints having a high content of rosin, e.g. the ones described in WO 97/44401 and WO 96/15198.

The fibres may, as it will be clear from the description of the manufacture processes further below, be added together with the remaining paint constituents before milling or may be added afterwards. It can however be expected that the average length of the fibres will be slightly reduced during the paint manufacture process (see further below), e.g., due to the milling process. (Milling is typically performed in order to break up agglomerates of fibres and other particles in the paint composition). It is believed that the paint manufacture process should be performed so that the fibres in the ready-to-use paint have an average length of 25-2000 µm and an average thickness of 1-50 µm with a ratio between the average length and the average thickness of at least 5, especially an average length of 25-500 µm and an average thickness of 1-25 µm with a ratio between the average length and the average thickness of at least 5, in particularly an average length of 50-250 µm (such as 50-170 µm) and an average thickness of 2-10 µm with a ratio between the average length and the average thickness of at least 5.

The concentration of the fibres is normally in the range of 0.1-25% by solids volume of the paint, such as 0.5-10% by solids volume of the paint. Especially relevant concentrations of fibres, depending upon the type and size of the fibres, may be 2-10%, such as 2-7%, or 3-10%, such as 3-8% by solids volume of the paint.

It should be understood that the above ranges refer to the total amount of fibres, thus, in the case where two or more fibre types are utilised, the combined amounts should fall within the above ranges.

The specific fibres used within the present invention may, in principle, be any fibres which, either in the native form or after surface modification, will improve the properties of an antifouling paint when tested in the Blister Box Test herein. Preferred fibres according to the invention are those which when incorporated in Model Paint Composition A in an amount of 5% by solids volume and tested for 24 weeks in the Blister Box Test herein, result in a decrease with respect to "Size of cracks", "Density of cracking", "Flaked area" or "Size of flaking" of at least 1 Ranking Unit Value, preferably at least 2 Ranking Unit Values, such as at least 3 Ranking Unit values, when compared to an identical test performed on the paint without fibres.

Self-polishing antifouling paints may include biologically active agents (see further below). In this case, self-polishing antifouling paints should be designed to regulate the leaching of biologically active agents by a controlled, and preferably uniform, dissolution of the paint through the entire coating lifetime, usually 2-5 years. The optimal design and performance of self-polishing antifouling paints depend on several variables associated with the ship profile and sailing pattern. Water temperature, fouling intensity, water salinity, dry-docking intervals, speed, and activity are the main factors that influence the paint behaviour. Thus, it should be possible to tailor make antifouling paint having polishing rates in a wide range so that the paint technology is applicable for a number of different vessel types.

Normally a ship operating at low speed with very low activity in an area of a high fouling intensity, *e.g*. a coastal fishing vessel sailing on Singapore, will need a relatively fast self-polishing antifouling paint, *e.g*. having a polishing rate in the range of 10-30 µm per 10,000 Nautical miles, in order to release sufficient amounts of biologically active agents to keep the hull free of fouling. On the other hand a ship operating at high speed with very high activity in an area of a low to moderate fouling intensity, *e.g*. a container ship in Iceland, will need a relatively slow self-polishing antifouling paint, *e.g*. having a polishing rate in the range of 1-3 µm per 10,000 Nautical miles.

As mentioned above, the content of the co-polymer defined above constitute at least 40% by solids volume of the binder system, preferably at least 50% by solids volume, in particular at least 60% by solids volume, such as at least 70% by solids volume, e.g. at least 80% by solids volume. In some cases the co-polymer defined above may constitute as much as 70-100% by solids volume of the binder system, such as 80-100% by solids volume of the binder system.

As will be understood by the person skilled in the art, one or several further binder components may be present in the binder system. Examples of such further binder components are:
oils such as linseed oil and derivatives thereof; castor oil and derivatives thereof; soy bean oil and derivatives thereof;
other polymeric binder components such as saturated polyester resins; polyvinylacetate, polyvinylbutyrate, polyvinylchloride-acetate, copolymers of vinyl acetate and vinyl isobutyl ether; vinylchloride; copolymers of vinyl chloride and vinyl isobutyl ether; alkyd resins or modified alkyd resins; hydrocarbon resins such as petroleum fraction condensates; chlorinated polyolefines such as chlorinated rubber, chlorinated polyethylene, chlorinated polypropylene; styrene copolymers such as styrene/butadiene copolymers, styrene/methacrylate and styrene/acrylate copolymers; acrylic resins such as homopolymers and copolymers of methyl methacrylate, ethyl methacrylate, n-butyl methacrylate, isobutyl methacrylate and isobutyl methacrylate; hydroxy-acrylate copolymers; polyamide resins such as polyamide based on dimerized fatty acids, such as dimerized tall oil fatty acids; cyclized rubbers; epoxy esters; epoxy urethanes; polyurethanes; epoxy polymers; hydroxy-polyether resins; polyamine resins; etc., as well as copolymers thereof;
rosin or rosin equivalents (e.g. those generally and specifically described in WO 97/44401 which is hereby incorporated by reference).

Further binder components preferably constitute 0-30%, such as 0-20%, by solids volume of the paint.

It should be understood that the group of other polymeric binder components may include polymeric flexibilisers such as those generally and specifically defined in WO 97/44401 which is hereby incorporated by reference.

As the paints according to the present invention are antifouling paints, it is often advantageous to incorporate at least one biologically active agent in the paint in order to further enhance the antifouling properties.

In the present context the term "biologically active agent" is intended to mean any chemical compound or mixture of chemical compounds which has the capability of suppressing the settlement and/or growth of marine organisms, to any substrate containing the biologically active agent. The suppression can be executed by any mechanism lethal to the organisms, by any mechanism resulting in deterrence and/or repellence of the organisms with or without causing mortality or by any mechanism inhibiting the settlement of the organisms with or without causing mortality.

Examples of biologically active agents are:
organometals such as metallo-dithiocarbamates such as bis(dimethyldithiocarbamato)zinc, ethylene-bis(dithiocarbamato)zinc, ethylene-bis(dithiocarbamato)manganese, and complexes between these; bis(1-hydroxy-2(1H)-pyridinethionato-O,S)-(T-4) copper, copper acrylate; bis(1-hydroxy-2(1H)-pyridinethionato-O,S)-(T-4) zinc; phenyl(bispyridyl)-bismuth dichloride;;
metal biocides such as copper, copper metal alloys such as copper-nickel alloys; metal oxides such as cuprous oxide and cupric oxide (even though e.g. cuprous oxide and cupric oxide may have pigment characteristics, it is understood that in the present context such biologically active agents are only considered as "biologically active agents"); metal salts such as cuprous thiocyanate, barium metaborate, and copper sulphide;
heterocyclic nitrogen compounds such as 3a,4,7,7a-tetrahydro-2-((trichloromethyl)-thio)-1H-isoindole-1,3(2H)-dione, pyridine-triphenylborane, 1-(2,4,6-trichlorophenyl)-1H-pyrrole-2,5-dione, 2,3,5,6-tetrachloro-4-(methylsulphonyl)-pyridine, 2-methylthio-4-tert-butylamino-6-cyclopropylamine-s-triazin, and quinoline derivatives;
heterocyclic sulphur compounds such as 2-(4-thiazolyl)benzimidazole, 4,5-dichloro-2-octyl-3(2H)-isothiazolone, 4,5-dichloro-2-octyl-3(2H)-isothiazoline, 1,2-benzisothiazolin-3-one, and 2-(thiocyanatomethylthio)-benzothiazole;
urea derivatives such as N-(1,3-bis(hydroxymethyl)-2,5-dioxo-4-imidazolidinyl)-N,N'-bis(hydroxymethyl)urea, and 3-(3,4-dichlorophenyl)-1,1-dimethyl urea;
amides or imides of carboxylic acids; sulphonic acids and of sulphenic acids such as 1,1-dichloro-N-((dimethylamino)sulphonyl)-1-fluoro-N-(4-methylphenyl)-methanesulphenamide, 2,2-dibromo-3-nitrilo-propionamide, N-(dichlorofluoromethylthio)-phthalimide, N,N-dimethyl-N'-phenyl-N'-(dichlorofluoromethylthio)-sulphamide, and N-methylol formamide;
salts or esters of carboxylic acids such as 2-((3-iodo-2-propynyl)oxy)-ethanol phenylcarbamate and N,N-didecyl-N-methyl-poly(oxyethyl)ammonium propionate;
amines such as dehydroabiethylamines and cocodimethylamine;
substituted methane such as di(2-hydroxy-ethoxy)methane, 5,5'-dichloro-2,2'-dihydroxydiphenylmethane, and methylene-bisthiocyanate;
substituted benzene such as 2,4,5,6-tetrachloro-1,3-benzenedicarbonitrile, 1,1-dichloro-N-((dimethylamino)-sulphonyl)-1-fluoro-N-phenylmethanesulphenamide, and 1-((diiodomethyl)sulphonyl)-4-methyl-benzene;
tetraalkyl phosphonium halogenides such as tri-n-butyltetradecyl phosphonium chloride;
guanidine derivatives such as n-dodecylguanidine hydrochloride;
disulphides such as bis-(dimethylthiocarbamoyl)-disulphide, tetramethylthiuram disulphide;
and mixtures thereof.

Presently, it is preferred that the biologically active agent is an agent which does not comprise tin.

In the antifouling paint, the total amount of the biologically active agent(s) may be in the range of 2-50%, such as 3-50%, by solids volume of the paint, preferably 5-50%, such as 5-40%, by solids volume of the paint. Depending upon the type and specific activity of the biologically active agent, the total amount of the biologically active agent may, *e.g*., be 5-15% or 10-25% by solids volume of the paint.

A typical marine antifouling paint according to the invention comprises a binder system based on a co-polymer as defined above, optionally at least one biologically active agent, and fibres as defined above. Furthermore, the antifouling paint may comprise one or more components selected among pigments, fillers, dyes, additives, and solvents. It should be understood that any solvents are not included in the contents stated as "% by solids volume". Instead, the content of solvent(s) is expressed as "solids volume ratio" or SVR which indicates the volume of the dry matter in relation to the total volume of the paint including the solvent.

Examples of pigments are grades of titanium dioxide, red iron oxide, zinc oxide, carbon black, graphite, yellow iron oxide, red molybdate, yellow molybdate, zinc sulphide, antimony oxide, sodium aluminium sulphosilicates, quinacridones, phthalocyanine blue, phthalocyanine green, titaniumdioxide, black iron oxide, graphite, indanthrone blue, cobalt aluminium oxide, carbazole dioxazine, chromium oxide, isoindoline orange, bis-acetoaceto-tolidiole, benzimidazolon, quinaphtalone yellow, isoindoline yellow, tetrachloroisoindolinone, quinophthalone yellow. Such materials are characterised in that they render the final paint coating non-transparent and non-translucent. The pigments may further be selected from pigment-like ingredients such as fillers. Examples of fillers are calcium carbonate, dolomite, talc, mica, barium sulphate, kaolin, silica, perlite, magnesium oxide, calcite and quartz flour, etc. These materials are characterised in that they do not render the paint non-translucent and therefore do not contribute significantly to hide any material below the coating of the paint of the invention.

In a preferred embodiment of the present invention, the paint has a total pigment content (pigment and pigment-like ingredients) in the range of 1-60%, preferably 1-50%, in particular 1-25%, such as 1-15%, of the solids volume of the paint.

Examples of dyes are 1,4-bis(butylamino)anthraquinone and other anthraquinone derivatives; toluidine dyes etc.

Examples of additives are:
plasticizers such as chlorinated paraffin; phthalates such as dibutyl phthalate, benzylbutyl phthalate, dioctyl phthalate, diisononyl phthalate and diisodecyl phthalate; phosphate esters such as tricresyl phosphate, nonylphenol phosphate, octyloxipoly(ethyleneoxy)ethyl phosphate, tributoxyethyl phosphate, isooctylphosphate and 2-ethylhexyl diphenyl phosphate; sulphonamides such as N-ethyl-p-taluensufphonamide, afkyl-p-toluene sulphonamide; adipates such as bis(2-ethylhexyl)adipate), dilsobutyl adipate and dioctyladipate; phosphoric acid triethyl ester, butyl stearate; sorbitan trioleate; and epoxidised soybean oil;
surfactants such as derivatives of propylene oxide or ethylene oxide such as alkylphenol-ethylene oxide condensates; ethoxylated monoethanolamides of unsaturated fatty acids such as ethoxylated monoethanolamides of linoleic acid; sodium dodecyl sulphate; alkylphenol ethoxylates; and soya lecithin;
wetting agents and dispersants such as those described in M. Ash and I. Ash, "Handbook of Paint and Coating Raw Materials, Vol. 1", 1996, Gower Publ, Ltd., Great Britain, pp 821-823 and 849-851;
defoaming agents such as silicone oils;
catalysts such as polymerization catalysts and initiators, *e.g*. azobisisotautyronitrile, ammonium persulphate, dilauryl peroxide, di-t-butyl peroxide, cumene hydroperoxide, p-toluenesulphonic acid; dryers, *e.g*. metal octoates and metal naphthenates; and activators, *e.g*. salicylic acid and benzyl alcohol;
stabilizers such as stabilizers against light and heat, *e.g*. hindered amine light stabilizers (HALS), 2-hydroxy-4-methoxybenzophenone, 2-(5-chloro-(2H)-benzotriazol-2-yl)-4-methyl-6-(tert-butyl)phenol, and 2,4-ditert-butyl-6-(5-chlorobenzotriazol-2-yl)phenol; stabilizers against moisture such as molecular sieves or water scavengers such as synthetic zeolites, substituted isocyanates, substituted silanes and ortho formic acid triethyl ester; stabilizers against oxidation such as butylated hydroxyanisole; butylated hydroxytoluene; propylgallate; tocopherols; 2,5-di-tert-butyl-hydroquinone; L-ascorbyl palmitate; carotenes; vitamin A;
polymerization inhibitors, *e.g*., dibenzoyl peroxide azobis-isobutyronitrile, para-benzoquinone, hydroquinone and methyl-hydroquinone;
inhibitors against corrosion such as aminocarboxylates, calcium silicophosphate, ammonium benzoate, barium/calcium/zinc/magnesium salts of alkylnaphthalene sulphonic acids, zinc phosphate; zinc metaborate;
coalescing agents such as glycols, 2-butoxy ethanol, and 2,2,4-trimethyl-1,3-pentanediol monoisobutyrate; and
thickeners and anti-settling agents such as colloidal silica, hydrated aluminium silicate (bentonite), aluminiumtristearate, aluminiummonostearate, ricinus oil, xanthan gum, salicylic acid, chrysotile, pyrogenic silica, hydrogenated castor oil, organo-modified clays, polyamide waxes and polyethylene waxes.

It is preferred that the paints according to the present invention comprises dyes and additives in a cumulative content of 0-15% by solids volume.

Examples of solvents in which the components of the antifouling paint are dissolved, dispersed or emulsified are water (e.g. in the form of a dispersion or an emulsion); alcohols such as methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 2-butoxyethanol, propylene glycol monomethyl ether and butyl diglycol; esters such as methoxypropyl acetate, n-butyl acetate and 2-ethoxyethyl acetate; chlorinated hydrocarbons such as methylene chloride, tetrachloroethane and trichloroethylene; and mixtures thereof.

A preferred embodiment of the marine antifouling paint according to the invention is a paint, which comprises one or more pigment(s) and one or more solvent(s) as well as any necessary or desirable dyes and additives.

The antifouling paint may be prepared by any suitable technique that is commonly used within the field of paint production. Thus, the various components may be mixed together using a high speed disperser, a ball mill, a pearl mill, a three-roll mill etc. The antifouling paints according to the invention may be filtrated using bag filters, patron filters, wire gap filters, wedge wire filters, metal edge filters, EGLM tumoclean filters (ex Cuno), DELTA strain filters (ex Cuno), and Jenag Strainer filters (ex Jenag), or by vibration filtration.

The optimal composition of the antifouling paints described herein will of course depend on the characteristics and properties of the individual components of the paint, in particular the type and concentration of the metal acrylate-based binder. In an especially interesting embodiments of the present invention, the paint has the following composition:
1) a binder co-polymer comprising at least one side chain bearing at least one terminal group of the formula I (see above) constituting 15-80% by solids volume of the paint;
2) further binder components constituting 0-30% by solids volume of the paint;
3) fibres constituting 0.1-30% by solids volume of the paint;
4) one or more biologically active agent(s) constituting 2-50% by solids volume of the paint;
5) one or more pigment(s) constituting 1-15% by solids volume of the paint;
6) dyes and additives constituting 0-15% by solids volume of the paint; and
7) optionally one or more solvents.

Further preferred embodiments relates to the above paint composition where the amount of the individual constituents is specified as described otherwise herein.

The antifouling paint according to the invention may be applied to the marine structure to be protected by means of any of the usual techniques used within the paint field such as by means of a brush, a roller, a pad, by dipping, by spraying etc. The exact technique chosen depends upon the object to be protected and also upon the particular composition (such as its viscosity etc.) and upon the particular situation. Preferred applications techniques are spraying and by means of a brush or a roller.

Depending on the application technique, it is desirable that the paint comprises solvent(s) so that the SVR is in the range of 30-100%, such as 30-70%.

The antifouling paint according to the invention may be applied to the marine structure to be protected in one or several successive layers, typically 1 to 5 layers, preferably 1 to 3 layers. The total dry film thickness (DFT) of the coating applied per layer will typically be 10-300 µm, preferably 20-250 µm, such as 40-200 µm. Thus, the thickness of the coating will typically be 10-900 µm, preferably 20-750 µm, in particular 40-600 µm, such as 80-400 µm.

The marine structure to which the paint according to the invention may be applied to may be any of a wide variety of solid objects that come into contact with water, for example vessels (including but not limited to boats, yachts, motorboats, motor launches, ocean liners, tugboats, tankers, container ships and other cargo ships, submarines (both nuclear and conventional), and naval vessels of all types); pipes; shore and off-shore machinery, constructions and objects of all types such as piers, pilings, bridge substructures, floatation devices, underwater oil well structures etc; nets and other mariculture installations; cooling plants; and buoys; and is especially applicable to the hulls of ships and boats and to pipes.

Prior to the application of a paint of the invention to a marine structure, the marine structure may first be coated with a primer-system which may comprise several layers and may be any of the conventional primer systems used in connection with application of antifouling paints to marine structures. Thus, the primer system may include an anticorrosive primer optionally followed by a layer of an adhesion-promoting primer. In a preferred embodiment, the primer-system is a composition having a polishing rate of less than 1 µm per 10,000 Nautical miles, i.e. the primer is a non-self-polishing coating.

As mentioned herein, the coating resulting from the paint according to the present invention is preferably self-polishing. Thus, the antifouling paint (actually the coating) should have a polishing rate of at least 1 µm per 10,000 Nautical miles (18,520 km). Preferably the polishing rate is in the range of 1-50 µm, in particular in the range of 1-30 µm per 10,000 Nautical miles (18,520 km).

It is furthermore preferred that the coating resulting from the paint according to the invention shows excellent mechanical properties when tested in various mechanical test.

Thus, in a preferred embodiment, the paint composition according to the invention is a paint composition which when tested in the Blister Box Test (as described herein) for 24 weeks, or alternatively 29 weeks, shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

It is found that the combination of "Density of cracking" and "Size of cracks" gives a particularly relevant evaluation of the effect of the invention, i.e. either should the "Density of cracking" show a decrease or alternatively should the "Size of cracks" show a decrease. In particular, both the "Density of cracking" and "Size of cracks" should show a decrease. In general it should however be understood that even when the "Density of cracking" is at about the same level than for a paint composition without fibres, a reduction of the "Size of cracks" will also be useful, and vice versa.

Thus, the paint composition should, when tested in the Blister Box Test (as described herein) for 24 weeks, or alternatively for 29 weeks, preferably show a decrease with respect to the sum of the ranking of "Density of cracking" and "Size of cracks" of at least 1 Ranking Value Unit, preferably at least 2 Ranking Value Units, such as at least 3, or 4, or 5, Ranking Value Units, when compared to an identical test performed on the paint without fibres

In another preferred embodiment of the invention, the paint composition according to the invention is such a paint composition which
i) when tested in the Blister Box Test (as described herein) for 24 weeks, or alternatively 29 weeks, shows a Ranking Value with respect to "Size of cracks" or "Density of cracking" of at the most 1, preferably 0;
   or
ii) when tested in the Blister Box Test (as described herein) for 24 weeks shows a Ranking Value with respect to "Flaked area" or "Size of flaking" of at the most 1, preferably 0.

### EXPERIMENTAL

### Polishing Rate Test

### Microtome test variant

A stainless steel panel (AISI 316 - 13.5 x 7 cm²) with a curvature corresponding to that of a cylindrical drum with a diameter of 1 m is first coated with 80 µm (DFT) of a commercial vinyl primer (Hempanyl Tar 16280 ex Hempel's Marine Paints A/S) applied by air spraying. After minimum 24 hours drying in the laboratory at room temperature the test paint is applied by air spraying in two coats in a DFT of approximately 100 µm per coat (total test paint DFT: 200 µm). Recoating interval between two coats of test paint: 24 hours. After at least 48 hours drying from the last test paint coat, bands of 1 cm width of a commercial, non-erodible vinyl antifouling coating (Classic 76550 ex Hempel's Marine Paints A/S) are applied along each longitudinal edge by dipping. As a result of this, the central part with a width of 5 cm remained uncovered by the non-erodible coating. The panel is dried for at least 1 week in the laboratory at room temperature before testing.

The test panel is fixed onto the convex surface of a cylindrical drum of 1 m in diameter and is rotated in sea water with a salinity in the range of 37-38 parts per thousand at an average temperature of 17-18°C at a test site in the harbour of Villanova y La Geltrú in Northeastern Spain which is situated at longitude 41.2°N (see also Morale, E. & Arias, E., Rev. lber. Corros. y Prot., vol XIX(2), 1988, pp. 91-96). The rotor is rotated at a peripheral speed of 15 knots for a relative distance of 33,100 Nautical miles.

Every 3-5 weeks, paint chips (1.0 x 0.5 cm²) are collected from the test panel in such a way that their surface comprised both a part coated with the experimental coating only as well as a part coated with both experimental coating and the non-erodible coating. The chips are embedded in paraffin wax and cut with a microtome. Cross sections of the experimental coating are examined under a microscope. Compared to the part coated with the non-erodible coating, the experimental coating shows a decrease of DFT of the outer layer corresponding to the polishing rate. The polishing rate (polishing per 10,000 Nautical miles (18,520 km)) is calculated.

Polishing rate tests are generally described by Furtado, S.E.J. and Fletcher, R.L., "Test Procedures For Marine Antifouling Paints. Preservatives in The Food Pharmaceutical and Environmental Industries", pp 145-163 (1987) and Van Londen, A.M., "Evaluation of Testing Methods for Antifouling Paints", Journal of Paint Technology, 42, pp 511-515 (1970).

### Isoscope test variant

A stainless steel panel (AISI 316 - 13.5 x 7 cm²) with a curvature corresponding to that of a cylindrical drum with a diameter of 1 m is first coated with 40 µm of an epoxy primer (Hempadur Primer 15300 ex Hempel's Marine Paints A/S). After 24 hours, the panel is coated with 80 µm (DFT) of a commercial vinyl primer (Hempanyl Tar 16280 ex Hempel's Marine Paints A/S) applied by air spraying. After minimum 24 hours drying in the laboratory at room temperature the test paint is applied by air spraying in two coats in a DFT of approximately 100 µm per coat (total test paint DFT: 200 µm). Recoating interval between two coats of test paint: 24 hours. The initial thickness of the coat of the test paint is measured using an ISOSCOPE MP-3. The panel is dried for at least 1 week in the laboratory at room temperature before testing.

The panel is placed on a rotor as described above. The thickness is controlled with periodic inspections using the ISOSCOPE MP-3. The polishing is the difference between the film thickness measures at a given inspection and the initial film thickness. The polishing rate is expressed as the polishing measured in µm per 10,000 Nm.

### Blister Box Test

### Preparation of panels

Acrylic panels (155x100x5 mm) are first coated with 80 µm (dry film thickness, DFT) of a commercial vinyl tar primer (Hempanyl 16280, from Hempel's Marine Paints) applied by air spraying. After 12-36 hours of drying in the laboratory at room temperature antifouling paints (commercial paints) are applied in the following way. A template (acrylic panel (155x100x5) with 4 holes (diameter = 41 mm)) is placed and fixed on top of the above mentioned panel coated with the primer. The antifouling paint adjusted to an viscosity of 70-75 KU is weighed into one of the holes. The amount of antifouling paint weighed into the whole corresponds to a final DFT of 250 µm or 450 µm (as specified in the actual example). The paint is spread through the hole surface through circular movements of the panel. Four paints may be applied to each panel (one in each hole). The template is removed 1-1½ hours after the application. The panels are dried for 4-5 days in the laboratory at room temperature before testing.

### Testing

Tests panels are tested in a Cleveland Condensation Tester (QCT from Q-Panel) in condensation and dry-off mode. QCT equipment is described in standard method ASTM D1735-92: *Testing water resistance of coatings using water fog apparatus.* Coated specimens are placed in an enclosed chamber where cycles of water fog (10 hours)/drying (2 hours) are applied. The temperature in the chamber is maintained at 50°C. During the water fog cycle water penetrates into the film while during the drying cycle water "escapes" from the paint film.

The test is operated for about 7 months (typically up to 29 weeks) and the paints are evaluated every week (or alternatively with intervals of 2-5 weeks) for film defects as described below. The first evaluation was however made after 1 day (24 hours).

Every week the paints are evaluated with respect to the the degree of cracking and the degree of flaking in accordance with the guidelines set forth in ISO standard 4628, parts 4 and 5.

Evaluation of the degree of cracking is based on the below ranking (ISO standard 4628, part 4):

| Density of cracking | Ranking Value |
|---|---|
| None | 0 |
| Less than few | 1 |
| Few | 2 |
| Medium | 3 |
| Medium - dense | 4 |
| Dense | 5 |

| Size of cracks | Ranking Value |
|---|---|
| Not visible under x 10 magnification | 0 |
| Only visible under magnification up to x 10 | 1 |
| Just visible with normal corrected vision | 2 |
| Clearly visible with normal corrected vision | 3 |
| Large cracks generally up to 1 mm wide | 4 |
| Very large cracks generally more than 1 mm wide | 5 |

Evaluation of the degree of flaking is based on the below ranking (ISO standard 4628, part 5):

| Flaked area (%) | Ranking Value |
|---|---|
| 0 | 0 |
| 0.1 | 1 |
| 0.3 | 2 |
| 1 | 3 |
| 3 | 4 |
| 15 | 5 |

| Size of flaking (largest dimension) | Ranking Value |
|---|---|
| Not visible under 10 x magnification | 0 |
| Up to 1 mm | 1 |
| Up to 3 mm | 2 |
| Up to 10 mm | 3 |
| Up to 30 mm | 4 |
| Larger than 30 mm | 5 |

### Model Paints

The following model paints (without fibres) can be prepared:

### Model Paint Composition A (without fibres)

58%, by solids volume, of a co-polymer as described herein
2%, by solids volume, of wetting agent Disperbyk 164 (ex. Byk Chemie, Germany)
2%, by solids volume, of fumed silica Aerosil 200 (ex. Degussa, Germany)
2%, by solids volume, of modified polyethylene wax Aditix M60 X (ex. Supercolori, Italy)
36%, by solids volume, of cuprous oxide (Red copper 97N premium grade ex American Chemet, USA)
Solids volume ratio (SVR): 50; Solvent : xylene

The following model paints (containing fibres) can be prepared:

### Model Paint Composition A1 (fibres included)

95% by solids volume of Model Paint A and 5% (by solids volume) of fibres.

### Examples of fibres to be incorporated in the model paint are:

Lapinus Rockfibre MS 600 (ex. Lapinus),
P045-MS 600 (ex Lapinus),
MS600 Roxul 1000 (ex Lapinus),
Nyad G ex. Nyco Minerals (U.S.A.),
Technocel 150D1 ex. C.F.F. Celllulose-Füllstoff-Fabrik (Germany), or
Technocel 90D1 ex. C.F.F. Celllulose-Füllstoff-Fabrik (Germany).

### Commercially available paint compositions

### Paint Composition B (without fibres)

Ecoloflex 360 (ex. International Paints, U.K.). This particular paint is based on a binder co-polymer comprising Cu/Zn-(meth)acrylate, i.e. a co-polymer as described herein

### Paint Composition B1 (fibres included)

95% (by solids volume) of Paint Composition B and 5% (by solids volume) of fibres (Lapinus Rockfibre MS 600 ex Lapinus or F PAC O 245/040 ex Schwarzwälder Textil-Werke).

### Paint Composition C (without fibres)

Ecoloflex SPC 200 (ex. Nippon Paints, Japan). This particular paint is based on a binder co-polymer comprising Cu/Zn-(meth)acrylate, i.e. a co-polymer as described herein

### Paint Composition C1 (fibres included)

95% (by solids volume) of Paint Composition C and 5% (by solids volume) of fibres (Lapinus Rockfibre MS 600 ex. Lapinus or F PAC O 245/040 ex Schwarzwälder Textil-Werke).

### Paint Composition F (without fibres)

Sea Grand Prix 100 (ex. Chugoku, Japan). This particular paint is based on a binder co-polymer comprising Cu/Zn-(meth)acrylate, i.e. a co-polymer as described herein.

### Paint Composition F1 (fibres included)

95% (by solids volume) of Paint Composition C and 5% (by solids volume) of fibres (F PAC O 245/040 ex Schwarzwälder Textil-Werke)

### Example 1

Model Paint Composition B (without fibres) and Model Paint Composition B1 (with fibres) were prepared as described above.

The employed fibre material was Lapinus Rockfibre MS 600 ex. Lapinus Fibres and F PAC O 245/040 ex Schwarzwälder Textil-Werke.

The model paints were subjected to the Blister Box Test and the obtained results are compiled in Tables 1.1-1.2 (DFT 250µm) and 1.3-1.4 (DFT 450 µm):

**Table 1.1: Density of cracking, DFT 250 microns**

| Paint Composition | Density of cracking observed after: | | |
|---|---|---|---|
| | 1 day | 24 | 29 (weeks) |
| B (without fibres) | 0 | 1 | 2 |
| B1 (with MS 600 fibres) | 0 | 0 | 0 |
| B1 (with F PAC O 245/040 fibres) | 0 | 0 | 0 |

**Table 1. 2: Size of cracks, DFT 250 micron**

| Model Paint Composition | Size of cracks observed after: | | |
|---|---|---|---|
| | 1 day | 24 | 29 (weeks) |
| B (without fibres) | 0 | 1 | 1 |
| B1 (with MS 600 fibres) | 0 | 0 | 0 |
| B1 (with F PAC O 245/040 fibres) | 0 | 0 | 0 |

**Table 1.3: Density of cracking, DFT 450 micron**

| Model Paint Composition | Density of cracking observed after: | | | |
|---|---|---|---|---|
| | 1 day | 19 | 24 | 29 (weeks) |
| B (without fibres) | 0 | 1 | 2 | 3 |
| B1 (with MS 600 fibres) | 0 | 0 | 1 | 1 |
| B1 (with F PAC O 245/040 fibres) | 0 | 0 | 1 | 1 |

**Table 1.4: Size of cracks, DFT 450 micron**

| Model Paint Composition | Size of cracks observed after: | | | |
|---|---|---|---|---|
| | 1 day | 19 | 24 | 29 (weeks) |
| B (without fibres) | 0 | 1 | 2 | 2 |
| B1 (with MS 600 fibres) | 0 | 0 | 1 | 2 |
| B1 (with F PAC O 245/040 fibres) | 0 | 0 | 1 | 1 |

As it appears from the above results, a significant reduction of sum of the rating for "density of cracking" and "size of cracking" is observed when 5% by solids volume of the above-mentioned fibre material is incorporated in the paint composition.

### Example 2

Model Paint Composition C (without fibres) and Model Paint Composition C1 (with fibres) were prepared as described above.

The employed fibre material was Lapinus Rockfibre MS 600 ex. Lapinus Fibres and F PAC O 245/040 ex Schwarzwälder Textil-Werke.

The model paints were subjected to the Blister Box Test and the obtained results are compiled in Tables 2.1-2.2 (DFT 250µm):

**Table 2.1: Density of cracking, DFT 250 micron**

| Model Paint Composition | Density of cracking observed after: | | | |
|---|---|---|---|---|
| | 1 day | 19 | 24 | 29 (weeks) |
| C (without fibres) | 0 | 1 | 1 | 3 |
| C1 (with MS 600 fibres) | 0 | 0 | 0 | 0 |
| C1 (with F PAC O 245/040 fibres) | 0 | 0 | 1 | 1 |

**Table 2.2: Size of cracks, DFT 250 microns**

| Model Paint Composition | Size of cracks observed after: | | | |
|---|---|---|---|---|
| | 1 day | 19 | 24 | 29 (weeks) |
| C (without fibres) | 0 | 1 | 1 | 1 |
| C1 (with MS 600 fibres) | 0 | 0 | 0 | 0 |
| C1 (with F PAC O 245/040 fibres) | 0 | 0 | 1 | 1 |

As it appears from the above results, a significant reduction of sum of the rating for "density of cracking" and "size of cracking" is observed when 5% by solids volume of the above-mentioned fibre material is incorporated in the paint composition.

### Example 3

Model Paint Composition F (without fibres) and Model Paint Composition F1 (with fibres) were prepared as described above.

The employed fibre material was Lapinus Rockfibre MS 600 ex. Lapinus Fibres and F PAC O 245/040 ex Schwarzwälder Textil-Werke. As a reference, a conventional filler material Lanco Mikal (mica) 00180 was used.

The model paints were subjected to the Blister Box Test and the obtained results are compiled in Tables 3.-3.2 (DFT 250 µm):

**Table 3.1: Density of cracking, DFT 250 microns**

| Model Paint Composition | Density of cracking observed after: | | |
|---|---|---|---|
| | 1 day | 24 | 29 (weeks) |
| F (without fibres) | 0 | 1 | 1 |
| F1 (with F PAC O 245/040 fibres) | 0 | 0 | 1 |
| F1 (with Mikal) | 0 | 1 | 1 |

**Table 3.2: Size of cracks, DFT 250 microns**

| Model Paint Composition | Size of cracks observed after: | | |
|---|---|---|---|
| | 1 day | 24 | 29 (weeks) |
| F (without fibres) | 0 | 1 | 2 |
| F1 (with F PAC O 245/040 fibres) | 0 | 0 | 1 |
| F1 (with Mikal) | 0 | 1 | 2 |

As it appears from the above results, a significant reduction of sum of the rating for "density of cracking" and "size of cracking" is observed when 5% by solids volume of the above-mentioned fibre material is incorporated in the paint composition.

### Comparative Example 1

Three commercial tin-based antifouling paints were tested in the Blister Box Test for 29 weeks, and none of these paints showed cracking in the Blister Box Text after 29 weeks:
HEMPEL'S ANTIFOULING ECONOMIC SP-SEA 74030
HEMPEL'S ANTIFOULING NAUTIC SP-ACE 79031
HEMPEL'S ANTIFOULING NAUTIC SP-ACE 79051

## Claims

1. A self-polishing marine antifouling paint composition comprising
i) at least one binder co-polymer comprising at least one side chain bearing at least one terminal group of formula I 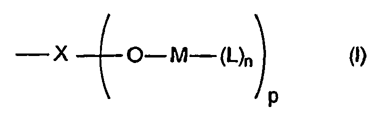 wherein X is 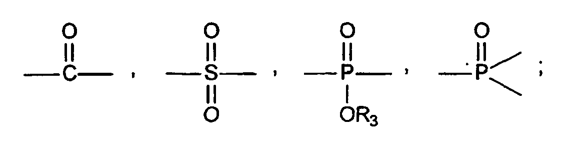 p is 1 or, if X is -P(=O)<, p is 2;
M is a metal whose valency is 2 or more;
n is an integer of 1 or more with the proviso that n+1 always equals the metal valency;
L is an organic acid residue and each L is independently selected from the group consisting of 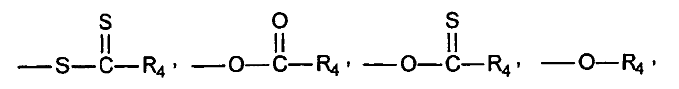 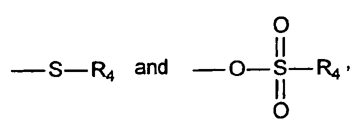 wherein R₄ is a monovalent organic residue, or L is -OH, or combinations thereof;
R₃ is hydrogen or a hydrocarbon group having from 1 to 10 carbon atoms; and
ii) fibres.

2. A paint composition according to claim 1, wherein said co-polymer comprises at least one side chain bearing at least one terminal group of formula II
-X-O-M-(L)ₙ (II)
wherein X is 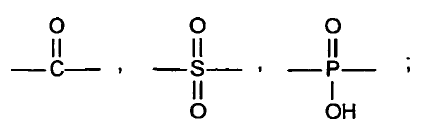 M, n and L are as defined in claim 1.

3. A paint composition according to claim 2, wherein X is -C(=O)-.

4. A paint composition according to any of the preceding claims, wherein the metal M is selected from the group consisting of Ca, Mg, Zn, Cu, Te, Ba, Pb, Fe, Co, Ni, Si, Ti, Mn, Al, Bi and Sn.

5. A paint composition according to claim 4, wherein the metal M is selected from the group consisting of Co, Ni, Cu, Zn, Mn and Te.

6. A paint composition according to claim 5, wherein the metal M is Cu or Zn.

7. A paint composition according to any of the preceding claims, wherein the monovalent organic residue R₄ is selected from the group consisting of 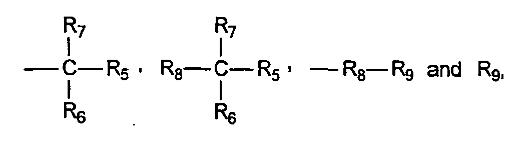 wherein
R₅ is hydrogen or a hydrocarbon group having from 1 to 20 carbon atoms;
R₆ and R₇ each independently represents a hydrocarbon group having from 1 to 12 carbon atoms;
R₈ is a hydrocarbon group having from 1 to 4 carbon atoms; and
R₉ is cyclic hydrocarbon group having from 5 to 20 carbon atoms.

8. A marine antifouling paint composition according to any of the preceding claims, wherein the binder co-polymer is selected from the group consisting of acrylic co-polymers, methacrylic co-polymers, polyester co-polymers, epoxy co-polymers and mixtures thereof.

9. A marine antifouling paint composition according to any of the preceding claims, wherein the paint further comprises an amount of an organic ligand at least equal to the ligand-to-metal co-ordination ratio of 1:1, said organic ligand being selected from the group consisting of aromatic nitro compounds, nitriles, urea compounds, alcohols, phenols, aldehydes, ketones, carboxylic acids and organic sulphur compounds,
whereby the co-polymer defined in claim 1 forms a polymer complex with the organic ligand in situ.

10. A paint composition according to any of the preceding claims, wherein the weight average molecular weight of the co-polymer is 1,000-150,000, such as 3,000-100,000, e.g. 5,000-60,000.

11. A marine antifouling paint composition according to any of the preceding claims, wherein the fibres are present in the paint in an amount of from 0.1 to 25% by solids volume.

12. A marine antifouling paint composition according to claim 11, wherein the fibres are present in the paint in an amount of from 1 to 10% by solids volume.

13. A marine antifouling paint composition according to claim 12, wherein the fibres are present in the paint in an amount of from 3 to 8% by solids volume.

14. A marine antifouling paint composition according to any of the preceding claims, which additionally comprises at least one biologically active agent.

15. A marine antifouling paint composition according to any of the preceding claims, which additionally comprises at least one pigment, at least one dye, at least one additive and/or at least one solvent.

16. A marine antifouling paint composition according to any of the preceding claims which when tested in the Blister Box Test (as described herein) for 24 weeks shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

17. A marine antifouling paint composition according to any of the preceding claims, which
i) when tested in the Blister Box Test (as described herein) for 24 weeks shows a Ranking Value with respect to "Size of cracks" or "Density of cracks" of at the most 1, preferably 0;
or
ii) when tested in the Blister Box Test (as described herein) for 24 weeks shows a Ranking Value with respect to "Flaked area" or "Size of flaking" of at the most 1, preferably 0.

18. A marine antifouling paint composition according to any of the preceding claims, where the fibres are such fibres that, when incorporated in the Model Paint Composition A (as described herein) in an amount of 5% by solids volume, and when tested in the Blister Box Test (as described herein) for 24 weeks shows a decrease with respect to "Size of cracks", "Density of cracking", "Flaked area" or "Size of flaking" of at least 1 Ranking Value Unit, preferably at least 2 Ranking Value Units, such as at least 3 Ranking value Units, when compared to an identical test performed on the paint without fibres.

19. A marine antifouling paint compositon according to claim 1 wherein the binder copolymer is a metal acrylate binder, **characterised in that** the paint composition further comprises fibres.

20. A marine antifouling paint composition according to claim 19, wherein the fibres are present in the paint in an amount of from 1 to 10% by solids volume.

## Patentansprüche

1. Selbstpolierende marine Antifoulinganstrichzusammensetzung, umfassend
i) mindestens ein Bindemittel-Copolymer, umfassend mindestens eine Seitenkette, die mindestens eine terminale Gruppe der Formel I 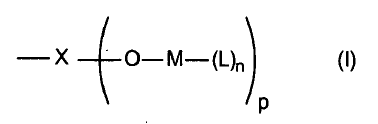 trägt
worin X 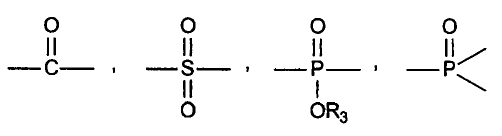 ist;
p 1 ist, oder, wenn X -P(=O)< ist, p 2 ist;
M ein Metall ist, dessen Wertigkeit 2 oder mehr ist;
n eine ganze Zahl von 1 oder mehr ist, unter der Bedingung, dass n+1 immer der Metallwertigkeit entspricht;
L ein organischer Säurerest ist, und jedes L unabhängig aus der Gruppe bestehend aus 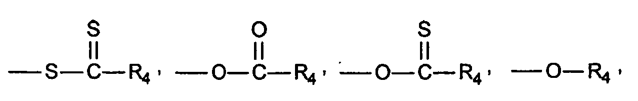 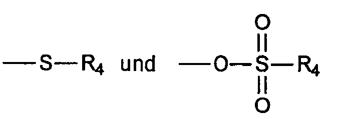 ausgewählt ist,
worin R₄ ein monovalenter organischer Rest ist, oder L -OH ist, oder Kombinationen davon,
R₃ Wasserstoff oder eine Kohlenwasserstoffgruppe mit 1 bis 10 Kohlenstoffatomen ist; und
ii) Fasern.

2. Anstrichzusammensetzung nach Anspruch 1, worin das Co-Polymer mindestens eine Seitenkette umfasst, die mindestens eine terminale Gruppe der Formel II
-X-O-M-(L)ₙ (II)
trägt,
worin X 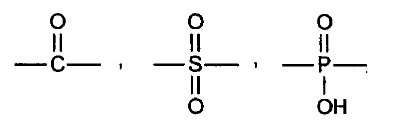 ist;
M, n und L wie in Anspruch 1 definiert sind.

3. Anstrichzusammensetzung nach Anspruch 2, worin X -C(=O)- ist.

4. Anstrichzusammensetzung nach irgendeinem der vorhergehenden Ansprüche, worin das Metall M aus der Gruppe, bestehend aus Ca, Mg, Zn, Cu, Te, Ba, Pb, Fe, Co, Ni, Si, Ti, Mn, Al, Bi und Sn, ausgewählt ist.

5. Anstrichzusammensetzung nach Anspruch 4, worin das Metall M aus der Gruppe, bestehend aus Co, Ni, Cu, Zn, Mn und Te, ausgewählt ist.

6. Anstrichzusammensetzung nach Anspruch 5, worin das Metall M Cu oder Zn ist.

7. Anstrichzusammensetzung nach irgendeinem der vorhergehenden Ansprüche, worin der monovalente organische Rest R₄ aus der Gruppe, bestehend aus 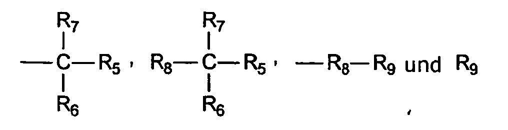 ausgewählt ist,
worin
R₅ Wasserstoff oder eine Kohlenwasserstoffgruppe mit 1 bis 20 Kohlenstoffatomen ist;
R₆ und R₇ jeder unabhängig voneinander eine Kohlenwasserstoffgruppe mit 1 bis 12 Kohlenstoffatomen darstellen;
R₈ eine Kohlenwasserstoffgruppe mit 1 bis 4 Kohlenstoffatomen ist; und
R₉ eine zyklische Kohlenwasserstoffgruppe mit 5 bis 20 Kohlenstoffatomen ist.

8. Marine Antifoulinganstrichzusammensetzung nach irgendeinem der vorhergehenden Ansprüche, worin das Bindemittel-Copolymer aus der Gruppe, bestehend aus Acryl-Co-Polymeren, Methacryl-Co-Polymeren, Polyester-Co-Polymeren, Epoxy-Co-Polymeren und Mischungen davon, ausgewählt ist.

9. Marine Antifoulinganstrichzusammensetzung nach irgendeinem der vorhergehenden Ansprüche, worin der Anstrich ferner eine Menge eines organischen Liganden umfasst, die mindestens dem Ligand-zu-Metall-Koordinationsverhältnis, von 1:1 entspricht, wobei der organische Ligand aus der Gruppe, bestehend aus aromatischen Nitroverbindungen, Nitrilen, Harnstoffverbindungen, Alkoholen, Phenolen, Aldehyden, Ketonen, Carbonsäuren und organischen Schwefelverbindungen, ausgewählt ist,
wobei das Co-Polymer wie in Anspruch 1 definiert in situ einen Polymerkomplex mit dem organischen Liganden bildet.

10. Anstrichzusammensetzung nach irgendeinem der vorhergehenden Ansprüche, worin das gewichtsmittlere Molekulargewicht des Co-Polymeren 1,000-150,000, wie 3,000-100,000, z.B. 5,000-60,000 ist.

11. Marine Antifoulinganstrichzusammensetzung nach irgendeinem der vorhergehenden Ansprüche, worin die Fasern im Anstrich in einer Menge von 0,1 bis 25% des Feststoffvolumens vorkommen.

12. Marine Antifoulinganstrichzusammensetzung nach Anspruch 11, worin die Fasern im Anstrich in einer Menge von 1 bis 10% des Feststoffvolumens vorkommen.

13. Marine Antifoulinganstrichzusammensetzung nach Anspruch 12, worin die Fasern im Anstrich in einer Menge von 3 bis 8% des Feststoffvolumens vorkommen.

14. Marine Antifoulinganstrichzusammensetzung nach irgendeinem der vorhergehenden Ansprüche, die zusätzlich mindestens einen biologischen wirksames Mittel umfasst.

15. Marine Antifoulinganstrichzusammensetzung nach irgendeinem der vorhergehenden Ansprüche, die zusätzlich mindestens ein Pigment, mindestens einen Farbstoff, mindestens ein Additiv und/oder mindestens ein Lösungsmittel umfasst.

16. Marine Antifoulinganstrichzusammensetzung nach irgendeinem der vorhergehenden Ansprüche, die, wenn sie im Blister Box-Test (wie hier beschrieben) für 24 Wochen getestet wurde, im Vergleich zu einem identischen Test, der mit dem Anstrich ohne Fasern durchgeführt wurde, eine Abnahme in bezug auf "Rißdichte", "Rißgröße", "abgeblätterte Fläche" oder "Abblätterungsgröße" um mindestens 1 Rangwerteinheit, bevorzugt mindestens 2 Rangwerteinheiten, wie beispielsweise mindestens 3 Rangwerteinheiten, zeigt.

17. Marine Antifoulinganstrichzusammensetzung nach irgendeinem der vorhergehenden Ansprüche, die
i) wenn sie im Blister Box-Test (wie hier beschrieben) für 24 Wochen getestet wurde, in bezug auf "Rißgröße" oder "Rißdichte" einen Rangwert von höchstens 1, vorzugsweise 0 zeigt;
oder
i) wenn sie im Blister Box-Test (wie hier beschrieben) für 24 Wochen getestet wurde, in bezug auf "abgeblätterte Fläche" oder "Abblätterungsgröße" einen Rangwert von höchstens 1, vorzugsweise 0 zeigt;

18. Marine Antifoulinganstrichzusammensetzung nach irgendeinem der vorhergehenden Ansprüche, wobei die Fasern solche Fasern sind, die, wenn sie in die Modellanstrichzusammensetzung A in einer Menge von 5% Feststoffvolumen (wie hier beschrieben) aufgenommen sind, und die, wenn sie im Blister Box-Test (wie hier beschrieben) für 24 Wochen getestet wurde, im Vergleich zu einem identischen Test, der mit dem Anstrich ohne Fasern durchgeführt wurde, eine Abnahme in bezug auf "Rißgröße", "Rißdichte", "abgeblätterte Fläche" oder "Abblätterungsgröße" um mindestens 1 Rangwerteinheit, bevorzugt mindestens 2 Rangwerteinheiten, wie beispielsweise mindestens 3 Rangwerteinheiten, zeigt.

19. Marine Antifoulinganstrichzusammensetzung nach Anspruch 1, worin das Bindemittel-Copolymer ein Metallacrylatbindemittel ist, **dadurch gekennzeichnet, dass** die Anstrichzusammensetzung ferner Fasern umfasst.

20. Marine Antifoulinganstrichzusammensetzung nach Anspruch 19, worin die Fasern im Anstrich in einer Menge von 1 bis 10% des Feststoffvolumens vorkommen.

## Revendications

1. Peinture autopolissante anti-salissure marine comprenant
i) au moins un copolymère liant comprenant au moins une chaîne latérale portant au moins un groupe terminal de formule I 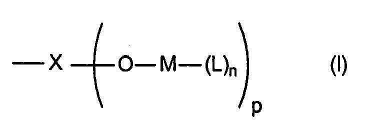 où X est 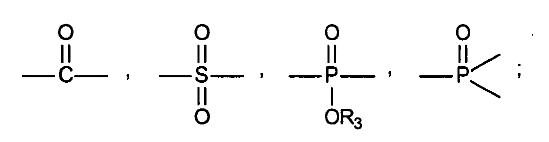 p est égal à 1 ou, si X est -P(=O)<, p est égal à 2 ;
M est un métal dont la valence est supérieure ou égale à 2 ;
n est un entier supérieur ou égal à 1 à condition que n+1 soit toujours égal à la valence du métal ;
L est un résidu d'acide organique et chaque L est choisi indépendamment dans le groupe consistué par 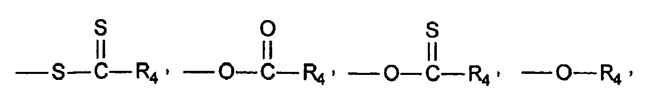 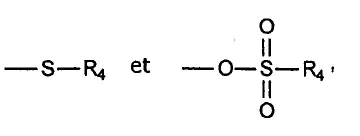 où R₄ est un résidu organique monovalent, ou bien L est -OH, ou leurs combinaisons ; R₃ est un hydrogène ou un groupe hydrocarbure ayant entre 1 et 10 atomes de carbone ; et
ii) des fibres.

2. Composition pour une peinture selon la revendication 1, où ledit copolymère comprend au moins une chaîne latérale portant au moins un groupe terminal de formule II
-X-O-M-(L)ₙ (II)
où X est 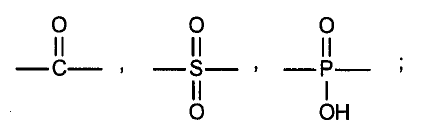 M, n et L sont tels que définis dans la revendication 1.

3. Composition pour une peinture selon la revendication 2, où X est -C(=O)-.

4. Composition pour une peinture selon une quelconque des revendications précédentes, où le métal M est choisi dans le groupe consistué par Ca, Mg, Zn, Cu, Te, Ba, Pb, Fe, Co, Ni, Si, Ti, Mn, Al, Bi et Sn.

5. Composition pour une peinture selon la revendication 4, où le métal M est choisi dans le groupe consistué par Co, Ni, Cu, Zn, Mn et Te.

6. Composition pour une peinture selon la revendication 5, où le métal M est Cu ou Zn.

7. Composition pour une peinture selon une quelconque des revendications précédentes, où le résidu organique monovalent R₄ est choisi dans le groupe consistué par 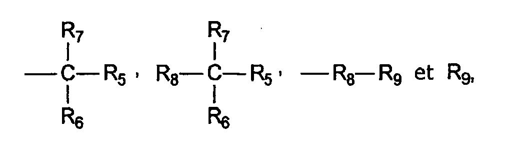 où
R₅ est un hydrogène ou un groupe hydrocarbure ayant entre 1 et 20 atomes de carbone ;
R₆ et R₇ représentent chacun indépendamment un groupe hydrocarbure ayant entre 1 et 12 atomes de carbone ;
R₈ est un groupe hydrocarbure ayant entre 1 et 4 atomes de carbone ; et
R₉ est un groupe hydrocarbure cyclique ayant entre 5 et 20 atomes de carbone.

8. Composition pour une peinture anti-salissure marine selon une quelconque des revendications précédentes, où le copolymère liant est choisi dans le groupe consistué par les copolymères acryliques, les copolymères méthacryliques, les copolymères de polyester, les copolymères époxy, et les mélanges de ceux-ci.

9. Composition pour une peinture anti-salissure marine selon une quelconque des revendications précédentes, où la peinture comprend en outre une quantité d'un ligand organique au moins égale au rapport de coordination ligand-à-métal de 1:1, ledit ligand organique étant choisi dans le groupe consistué par les composés nitro-aromatiques, les nitriles, les composés uréiques, les alcools, les phénols, les aldéhydes, les cétones, les acides carboxyliques et les composés sulfurés organiques,
par l'intermédiaire de quoi le copolymère défini dans la revendication 1 forme un complexe polymérique avec le ligand organique in situ.

10. Composition pour une peinture selon une quelconque des revendications précédentes, où la moyenne en poids du poids moléculaire du copolymère est de 1 000-150 000, telle que de 3 000-100 000, par exemple de 5 000-60 000.

11. Composition pour une peinture anti-salissure marine selon une quelconque des revendications précédentes, où les fibres sont présentes dans la peinture dans une quantité comprise entre 0,1 et 25% du volume de solides.

12. Composition pour une peinture anti-salissure marine selon la revendication 11, où les fibres sont présentes dans la peinture dans une quantité comprise entre 1 et 10% du volume de solides.

13. Composition pour une peinture anti-salissure marine selon la revendication 12, où les fibres sont présentes dans la peinture dans une quantité comprise entre 3 et 8% du volume de solides.

14. Composition pour une peinture anti-salissure marine selon une quelconque des revendications précédentes, qui comprend en plus au moins un agent biologiquement actif.

15. Composition pour une peinture anti-salissure marine selon une quelconque des revendications précédentes, qui comprend en outre au moins un pigment, au moins une teinture, au moins un additif et/ou au moins un solvant.

16. Composition pour une peinture anti-salissure marine selon une quelconque des revendications précédentes, qui lorsqu'elle est testée dans le Test de la Boîte à Cloques (ainsi que décrit ici) pendant 24 semaines montre une diminution quant à la « Densité de craquelage », à la « Taille des craquelures », à la « Surface écaillée » ou à la « Taille des écailles » d'au moins 1 Unité de Valeur de Classement, de préférence d'au moins 2 Unités de Valeur de Classement, par exemple d'au moins 3 Unités de Valeur de Classement, en comparaison à un test identique réalisé avec la peinture sans les fibres.

17. Composition pour une peinture anti-salissure marine selon une quelconque des revendications précédentes, qui
i) lorsqu'elle est testée dans le Test de la Boîte à Cloques (ainsi que décrit ici) pendant 24 semaines, montre une Valeur de Classement quant à la « Taille des craquelures » ou à la « Densité de craquelage » d'au plus 1, de préférence de 0 ;
ou
ii) lorsqu'elle est testée dans le Test de la Boîte à Cloques (ainsi que décrit ici) pendant 24 semaines, montre une Valeur de Classement quant à la « Surface écaillée » ou à la « Taille des écailles » d'au plus 1, de préférence de 0.

18. Composition pour une peinture anti-salissure marine selon une quelconque des revendications précédentes, où les fibres sont telles que, lorsqu'elles sont incorporées dans la Composition Modèle pour Peinture A (ainsi que décrit ici) dans une quantité de 5% en volume de solides, et qui lorsque testée dans le Test de la Boîte à Cloques (ainsi que décrit ici) pendant 24 semaines montre une diminution quant à la « Taille des craquelures », à la « Densité de craquelage », à la « Surface écaillée » et à la « Taille des écailles » d'au moins 1 Unité de Valeur de Classement, de préférence d'au moins 2 Unités de Valeur de Classement, par exemple d'au moins 3 Unités de Valeur de Classement, en comparaison à un test identique réalisé sur la peinture sans les fibres.

19. Composition pour une peinture anti-salissure marine selon la revendication 1, où le copolymère liant est un liant d'acrylate de métal, **caractérisée en ce que** la composition pour la peinture comprend en outre des fibres.

20. Composition pour une peinture anti-salissure marine selon la revendication 19, où les fibres sont présentes dans la peinture dans une quantité comprise entre 1 et 10% du volume de solides.
